# EUROPEAN PATENT SPECIFICATION

(11) **EP 4 408 008 B1**
(45) Date of publication and mention of the grant of the patent: **17.06.2026**
(21) Application number: 23810798.1
(22) Date of filing: 06.05.2023
(51) Int. Cl.: H04N 23/69, H04N 23/67, H04N 23/60, H04N 23/61, H04N 23/62, H04N 23/63, H04N 23/70, H04N 5/77

(54) **VIDEO RECORDING METHOD AND RELATED APPARATUS**
VIDEOAUFZEICHNUNGSVERFAHREN UND ZUGEHÖRIGE VORRICHTUNG
PROCÉDÉ D'ENREGISTREMENT VIDÉO ET APPAREIL ASSOCIÉ

(30) Priority: 25.05.2022 CN 202210576752
(43) Date of publication of application: 31.07.2024
(73) Proprietor: Honor Device Co., Ltd., Shenzhen, Guangdong 518040 (CN)
(72) Inventor: HUANG, Yufei, Shenzhen, Guangdong 518040 (CN); YI, Jie, Shenzhen, Guangdong 518040 (CN)
(74) Representative: Gill Jennings & Every LLP
(86) International application number: PCT/CN2023/092422
(87) International publication number: WO 2023/226725

(56) References cited:
- EP-A1- 4 087 231
- WO-A1-2018/166069
- CN-A- 101 115 148
- CN-A- 104 333 689
- CN-A- 108 781 254
- CN-A- 109 194 839
- CN-A- 111 212 235
- CN-A- 111 212 235
- US-A1- 2011 150 446
- US-A1- 2016 205 307
- US-A1- 2018 227 506
- US-A1- 2020 314 318

## Description

This application claims priority to Chinese Patent Application No. 202210576752.7, filed with the China National Intellectual Property Administration on May 25, 2022 and entitled "VIDEO RECORDING METHOD AND RELATED APPARATUS".

### TECHNICAL FIELD

This application relates to the field of terminal technologies, and in particular, to a video recording method and a related apparatus.

### BACKGROUND

To improve user experience, a plurality of cameras are usually configured on an electronic device such as a mobile phone or a tablet computer. For example, a front-facing camera and a rear-facing camera are respectively configured on the electronic device. A user may select a corresponding capturing mode based on needs of the user, such as a front camera mode, a rear camera mode, or a front-rear dual camera mode.

In some scenarios, a video captured by the user by using the electronic device includes one or more characters. When the user intends to obtain a video with a single character, the user needs to perform manual editing processing on the video.

However, a manual editing manner is cumbersome and inefficient, making the user experience of the electronic device poor. US 2018/227506 A1 discloses an electronic device with a camera that captures a moving image of a subject, automatically generates multiple related images or sub-images e.g., corresponding to different regions or parts of the subject, and concurrently displays the original and sub-images in different regions of a display, allowing the user to configure the layout, apply visual effects, and generate and store combined images composed of these concurrently displayed images.

US 2011/150446 A1 relates to a digital camera, in particular a multi-lens camera system, in which autofocus search start positions and directions are controlled using an AF safety range so as to speed up focusing. The disclosure also describes a conventional exposure control interface including an auto-exposure lock button and exposure value compensation button on the camera body.

CN 111 212 235 A, provides a long-focus shooting method and an electronic device.

US 2016/205307 A1 discloses an exposure control apparatus that prevents exposure from being influenced by false detection and instability of face detection and prevents exposure from being influenced by an object that has cut across in front of a subject.

US 2020/314318 A1 discloses a means capable of performing live view display with visibility of a main object area (tracked object) in an imaging apparatus having a plurality of image capture units.

### SUMMARY

The invention is defined by the independent claims. The dependent claims define advantageous embodiments.

### BRIEF DESCRIPTION OF DRAWINGS

FIG. 1 is a schematic diagram of a structure of a hardware system of a terminal device according to an embodiment of this application;
FIG. 2 is a schematic diagram of a structure of a software system of a terminal device according to an embodiment of this application;
FIG. 3A is a schematic diagram of an application scenario according to an embodiment of this application;
FIG. 3B is a schematic diagram of a preview interface of a protagonist mode according to an embodiment of this application;
FIG. 3C is a schematic diagram of a recording interface of a protagonist mode according to an embodiment of this application;
FIG. 4 is a schematic diagram of an interface in which a terminal device enters a protagonist mode according to an embodiment of this application;
FIG. 5 is a schematic diagram of an interface in which a terminal device enters a protagonist mode according to an embodiment of this application;
FIG. 6 is a schematic diagram of an interface corresponding to a recording procedure of a protagonist mode according to an embodiment of this application;
FIG. 7 is a schematic diagram of an interface corresponding to a recording procedure of a protagonist mode according to an embodiment of this application;
FIG. 8A is a schematic diagram of an interface for exposure adjustment in a preview scenario according to an embodiment of this application;
FIG. 8B is a schematic diagram of an interface for exposure adjustment in a preview scenario according to an embodiment of this application;
FIG. 8C is a schematic diagram of an interface for exposure adjustment in a preview scenario according to an embodiment of this application;
FIG. 8D is a schematic diagram of an interface for exposure adjustment in a preview scenario according to an embodiment of this application;
FIG. 9A is a schematic diagram of an interface for exposure adjustment in a recording scenario according to an embodiment of this application;
FIG. 9B is a schematic diagram of an interface for exposure adjustment in a recording scenario according to an embodiment of this application;
FIG. 9C is a schematic diagram of an interface for exposure adjustment in a recording scenario according to an embodiment of this application;
FIG. 9D is a schematic diagram of an interface for exposure adjustment in a recording scenario according to an embodiment of this application;
FIG. 10 is a schematic diagram of an interface for exposure adjustment in a recording scenario according to an embodiment of this application;
FIG. 11 is a schematic flowchart of a video recording method according to an embodiment of this application; and
FIG. 12 is a schematic diagram of a structure of a video recording apparatus according to an embodiment of this application.

### DESCRIPTION OF EMBODIMENTS

For ease of describing the technical solutions in the embodiments of this application clearly, in the embodiments of this application, terms such as "first" and "second" are used to distinguish same or similar items with a basically same function and role. For example, a first chip and a second chip are merely used to distinguish between different chips, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in embodiments of this application, the term "example" or "for example" or the like is used to represent giving an example, an illustration, or a description. Any embodiment or design solution described as an "example" or "for example" in this application should not be explained as being more preferred or having more advantages than another embodiment or design solution. Exactly, use of the term such as "example" or "for example" is intended to present a related concept in a specific manner.

In embodiments of this application, "at least one" means one or more, and "a plurality of" means two or more. "And/or" describes an association relationship for describing associated objects and represents that three relationships may exist. For example, A and/or B may represent that: only A exists, both A and B exist, and only B exists, where A and B may be singular or plural. The character "/" generally indicates an "or" relationship between the associated objects. "At least one of the following" or a similar expression thereof refers to any combination of these items, including one item or any combination of a plurality of items. For example, at least one of a, b, or c may represent a, b, c, "a and b", "a and c", "b and c", or "a, b, and c", where a, b, and c may be singular or plural.

Embodiments of this application provide a video recording method, which may be applied to an electronic device that has a capturing function. The electronic device includes a terminal device, and the terminal device may also be referred to as a terminal (terminal), a user equipment (user equipment, UE), a mobile station (mobile station, MS), a mobile terminal (mobile terminal, MT), or the like. The terminal device may be a mobile phone (mobile phone), an intelligent television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical care (remote medical), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

To make embodiments of this application more comprehensible, the following describes a structure of the terminal device in embodiments of this application.

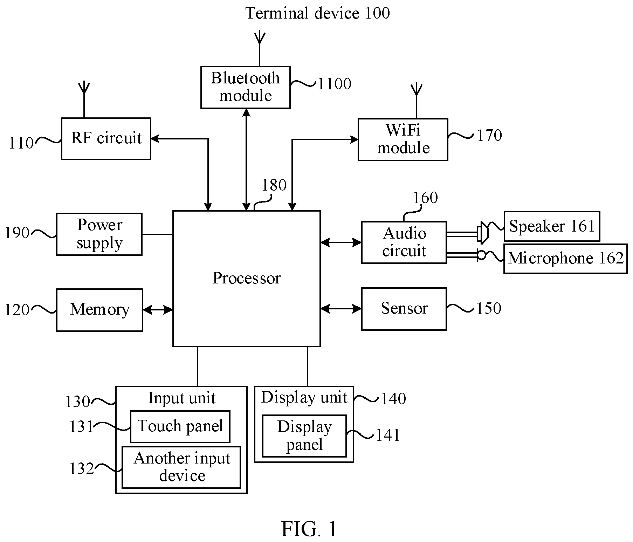

FIG. 1 is a schematic diagram of a structure of a terminal device 100. The terminal device may include components such as a radio frequency (radio frequency, RF) circuit 110, a memory 120, an input unit 130, a display unit 140, a sensor 150, an audio circuit 160, a wireless fidelity (wireless fidelity, WiFi) module 170, a processor 180, a power supply 190, and a Bluetooth module 1100. A person skilled in the art may understand that the structure of the terminal device shown in FIG. 1 is not intended to limit the terminal device, and the terminal device may include more components or fewer components than those shown in the figure, or some components may be combined, or a different component deployment may be used.

The following specifically describes the components of the terminal device with reference to FIG. 1.

The RF circuit 110 may be configured to receive and send a signal in an information receiving and sending process or a call process, and in particular, after downlink information of a base station is received, send the downlink information to the processor 180 for processing. In addition, the RF circuit sends uplink data to the base station. Usually, the RF circuit includes, but not limited to: an antenna, at least one amplifier, a transceiver, a coupler, a low noise amplifier (low noise amplifier, LNA), a duplexer, and the like. In addition, the RF circuit 110 may also communicate with a network and another device by wireless communication. The wireless communication may use any communication standard or protocol, including, but not limited to: global system of mobile communication (global system of mobile communication, GSM), general packet radio service (general packet radio service, GPRS), code division multiple access (code division multiple access, CDMA), wideband code division multiple access (wideband code division multiple access, WCDMA), long term evolution (long term evolution, LTE), email, short messaging service (short messaging service, SMS), and the like.

The memory 120 may be configured to store a software program and a module, and the processor 180 runs the software program and the module that are stored in the memory 120, to perform various functional applications and data processing of the terminal device. The memory 120 may mainly include a program storage region and a data storage region. The program storage region may store an operating system, an application program required by at least one function (for example, a sound playback function and an image playback function), a boot loader (boot loader), or the like. The data storage region may store data (for example, audio data and a phone book) created according to use of the terminal device. In addition, the memory 120 may include a high speed random access memory, and may also include a non-volatile memory, such as at least one magnetic disk storage device, a flash memory, or another volatile solid-state storage device. It may be understood that, in this embodiment of this application, the memory 120 stores a Bluetooth device reconnection program.

The input unit 130 may be configured to receive input digit or character information, and generate a keyboard signal input related to a user setting and function control of the terminal device. For example, the input unit 130 may include a touch panel 131 and another input device 132. The touch panel 131 is also referred to as a touchscreen, may collect a touch operation that is performed by a user on or near the touch panel 131 (for example, an operation that is performed by a user by using any appropriate object or accessory such as a finger or a stylus on or near the touch panel 131), and drive a corresponding connection apparatus according to a preset program. Optionally, the touch panel 131 may include two parts: a touch detection apparatus and a touch controller. The touch detection apparatus detects a touch orientation of the user, detects a signal brought through the touch operation, and transmits the signal to the touch controller. The touch controller receives touch information from the touch detection apparatus, converts the touch information into a contact coordinate, then transmits the contact coordinate to the processor 180, and receives and executes a command transmitted by the processor 180. In addition, the touch panel 131 may be implemented by using various types, such as a resistive type, a capacitance type, an infrared type, and a surface acoustic wave type. In addition to the touch panel 131, the input unit 130 may further include the another input device 132. Specifically, the another input device 132 may include, but not limited to: one or more of a physical keyboard, a functional key (such as a volume control key or a switch key), a track ball, a mouse, and a joystick.

The display unit 140 may be configured to display information input by the user or information provided for the user, and various menus of the terminal device. The display unit 140 may include a display panel 141. Optionally, the display panel 141 may be configured by using a liquid crystal display (LCD), an organic light-emitting diode (OLED), or the like. Further, the touch panel 131 may cover the display panel 141. After detecting a touch operation on or near the touch panel, the touch panel 131 transfers the touch operation to the processor 180, to determine a type of a touch event. Then, the processor 180 provides a corresponding visual output on the display panel 141 based on the type of the touch event. Although in FIG. 1, the touch panel 131 and the display panel 141 are used as two separate parts to implement input and output functions of the terminal device, in some embodiments, the touch panel 131 and the display panel 141 may be integrated to implement the input and output functions of the terminal device.

The terminal device may further include at least one sensor 150, such as an optical sensor, a motion sensor, and other sensors. Specifically, the optical sensor may include an ambient light sensor and a proximity sensor. The ambient light sensor may adjust luminance of the display panel 141 according to brightness of the ambient light. The proximity sensor may switch off the display panel 141 or backlight when the terminal device is moved to the ear. As one type of motion sensor, an accelerometer sensor can detect magnitudes of accelerations in various directions (generally, on three axes), may detect a magnitude and a direction of the gravity when static, and may be configured to recognize attitude application of the terminal device (for example, switching between landscape orientation and portrait orientation, a related game, and magnetometer attitude calibration), a function related to vibration recognition (such as a pedometer and a knock), and the like. As to other sensors such as a gyroscope, a barometer, a hygrometer, a thermometer, and an infrared sensor that may be further configured on the terminal device, details are not repeatedly described herein.

The audio circuit 160, a speaker 161, and a microphone 162 may provide audio interfaces between the user and the terminal device. The audio circuit 160 may transmit, to the speaker 161, an electrical signal obtained by converting received audio data, and the speaker 161 converts the electrical signal into a voice signal for outputting. According to another aspect, the microphone 162 converts the collected sound signal into an electrical signal, the electrical signal is converted into audio data after received by the audio circuit 160, and the audio data is sent to another terminal device through the RF circuit 110 after being outputted to the processor 180 for processing, or the audio data is outputted to the memory 120 for further processing.

WiFi belongs to a short distance wireless transmission technology. The terminal device may help, by using the WiFi module 170, a user to receive and send an email, browse a web page, access stream media, and the like. This provides wireless broadband Internet access for the user. Although FIG. 1 shows the WiFi module 170, it may be understood that the WiFi module 170 is not an essential component of the terminal device, and the WiFi module 170 may be omitted as required.

The processor 180 is a control center of the terminal device, and connects to various parts of the terminal device using various interfaces and lines. By running or executing the software program or module stored in the memory 120, and invoking data stored in the memory 120, the processor 180 performs various functions and data processing of the terminal device, thereby performing overall monitoring on the terminal device. Optionally, the processor 180 may include one or more processing units. Preferably, the processor 180 may integrate an application processor and a modem. The application processor mainly processes an operating system, a user interface, an application program, and the like. The modem mainly processes wireless communication. It may be understood that the foregoing modem may not be integrated into the processor 180.

It may be understood that, in this embodiment of this application, the memory 120 stores a video recording program, and the processor 180 may be configured to invoke and execute the video recording program stored in the memory 120, to implement the video recording method provided in this embodiment of this application.

The terminal device further includes the power supply 190 (such as a battery) for supplying power to the components. Preferably, the power supply may be logically connected to the processor 180 by using a power management system, thereby implementing functions such as charging, discharging, and power consumption management by using the power management system.

A Bluetooth technology is a short-distance wireless transmission technology, and the terminal device may exchange, by using the Bluetooth module 1100, data with another terminal device equipped with a Bluetooth module, to perform data transmission based on a Bluetooth communication link. The Bluetooth module 1100 may be a bluetooth low energy (bluetooth low energy, BLE), a module, or the like based on an actual need. It may be understood that, in a case that the terminal device in this embodiment of this application is a user terminal and a service machine, and the terminal device includes a Bluetooth module. However, it may be understood that, the Bluetooth module is not an essential component of the terminal device, and may be omitted as required. For example, a server may not include the Bluetooth module.

Although not shown in the figure, the terminal device further includes a camera. Optionally, a position of the camera on the terminal device may be front-facing, or may be rear-facing, or may be built-in (can be extended out of a body during use). This is not limited in this embodiment of this application.

Optionally, the terminal device may include a single camera, two cameras, three cameras, or the like. This is not limited in this embodiment of this application. The camera includes, but not limited to: a wide-angle camera, a telephoto camera, a depth camera, or the like. For example, the terminal device may include three cameras, where one is a main camera, another is a wide-angle camera, another is a telephoto camera.

Optionally, when the terminal device includes a plurality of cameras, the plurality of cameras may be all front-facing, or all rear-facing, or all built-in, or at least partially front-facing, or at least partially rear-facing, or at least partially built-in, or the like. This is not limited in this embodiment of this application.

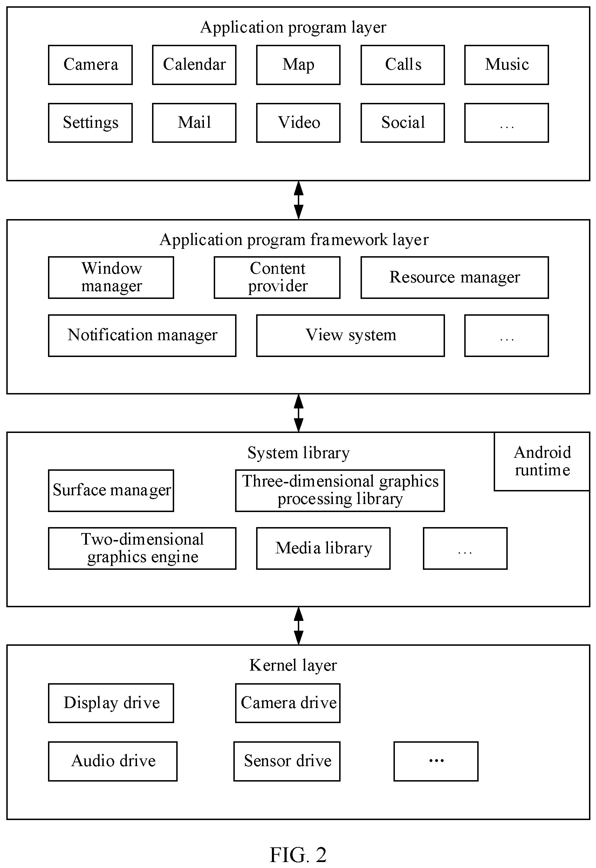

For example, FIG. 2 is a block diagram of a software structure of a terminal device 100 according to an embodiment of this application.

In a layered architecture, software is classified into several layers, and each layer has a clear role and task. The layers communicate with each other through a software interface. In some embodiments, an Android system is divided into four layers that are respectively an application program layer, an application program framework layer, an Android runtime (Android runtime) and system library, and a kernel layer from top to bottom.

The application program layer may include a series of application program packages. As shown in FIG. 2, the application program packages may include application programs such as camera, gallery, phone, map, phone, music, settings, mail, video, and social.

The application program framework layer provides an application programming interface (application programming interface, API) and a programming framework for an application program at the application program layer. The application program framework layer includes some predefined functions.

As shown in FIG. 2, the application program framework layer may include a window manager, a content provider, a resource manager, a view system, a notification manager, and the like.

The window manager is configured to manage a window program. The window manager may obtain a size of a display screen, determine whether there is a status bar, lock a screen, touch a screen, drag a screen, capture a screen, and the like.

The content provider is configured to store and obtain data and make the data accessible to an application program. The data may include a video, an image, an audio, calls made and answered, a browsing history and bookmarks, an address book, and the like.

The view system includes visual controls such as a control for displaying a text and a control for display an image. The view system may be configured to construct an application program. A display interface may be formed by one or more views. For example, a display interface including an SMS message notification icon may include a view for displaying a text and a view for displaying an image.

The resource manager provides various resources such as a localized character string, an icon, a picture, a layout file, and a video file for an application program.

The notification manager enables an application program to display notification information in the status bar that may be used to convey a message of a notification type, where the message may disappear automatically after a short stay without user interaction. For example, the notification manager is configured to notify download completion, a message prompt, and the like. The notification manager may alternatively be a notification that appears on a top status bar of the system in a form of a graph or a scroll bar text, for example, a notification of an application program running on the background, or may be a notification that appears on the screen in a form of a dialog window. For example, text information is prompted on a status bar, a prompt tone is made, the terminal device vibrates, or an indicator light flashes.

The Android runtime includes a core library and a virtual machine. The Android runtime is responsible for scheduling and management of the Android system.

The core library includes two parts: one is a function that needs to be called by a java language, and the other is a core library of Android.

The application program layer and the application program framework layer run on the virtual machine. The virtual machine executes java files of the application program layer and the application program framework layer as binary files. The virtual machine is configured to perform functions such as object lifecycle management, stack management, thread management, security and exception management, and garbage collection.

The system library may include a plurality of function modules, such as a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of application programs.

The media library supports playback and recording in a plurality of common audio and video formats, a static image file, and the like. The media library may support a plurality of audio and video encoding formats such as MPEG4, H.264, MP3, AAC, AMR, JPG, and PNG.

The three-dimensional graphics processing library is configured to implement drawing of three-dimensional graphics, image rendering, synthesis, layer processing, and the like.

The 2D graphics engine is a drawing engine for 2D graphics.

The kernel layer is a layer between hardware and software. The kernel layer includes at least a display drive, a camera drive, an audio drive, and a sensor drive.

For example, the following describes working procedures of software and hardware of the terminal device with reference to an interface switching scenario of the terminal device.

When a touch sensor in the terminal device receives a touch operation, a corresponding hardware interrupt is sent to the kernel layer. The kernel layer processes the touch operation into an original input event (including information such as coordinates of a touch, a touch force, and a time stamp of the touch operation). The original input event is stored at the kernel layer. The application program framework layer obtains the original input event from the kernel layer, and recognizes a control corresponding to the input event. Using an example in which the touch operation is a touch/click operation, and a control corresponding to the click operation is a control of a camera application icon. The camera application invokes an interface of the application framework layer to start a camera application, then starts a display drive by invoking the kernel layer, and displays a functional interface of the camera application.

After the camera application is started, the camera application may invoke a camera access interface in the application program framework layer to start a capturing function of the camera, and drive one or more cameras to acquire one or more frames of images in real time based on a camera drive in the kernel layer. After the camera acquires the image, the image may be transmitted to the camera application in real time through the kernel layer, the system library, and the application program framework layer, and then the camera application displays the image to a corresponding functional interface.

The following describes the technical solutions of this application and how to resolve the foregoing technical problems according to the technical solutions of this application in detail by using specific embodiments. The following several specific embodiments may be independently implemented, and may also be combined with each other, and the same or similar concepts or processes may not be described repeatedly in some embodiments.

To improve user experience, a plurality of cameras are usually configured on a terminal device such as a mobile phone or a tablet computer. The terminal device may provide, through a plurality of configured cameras, a plurality of capturing modes for a user, such as a front camera mode, a rear camera mode, a front-rear dual camera mode, and a protagonist mode. The user may select a corresponding capturing mode for capturing based on a capturing scenario.

The protagonist mode may be understood as a mode in which a portrait focusing video may be additionally generated when the terminal device records a video. To be specific, more than two videos are stored when the recording is completed, where one is a recorded original video, and the other video is a video automatically cropped from the original video based on a tracked target portrait. A portrait in the portrait focusing video may be understood as a "protagonist" that the user pays attention to. A method for generating a video corresponding to the "protagonist" may be: cropping video content corresponding to the "protagonist" from a video commonly recorded by the terminal device.

The "protagonist" may be a living organism such as a character or an animal, or a non-living organism such as a vehicle. It may be understood that, any object that may be recognized based on an algorithm model may be used as the "protagonist" in embodiments of this application. In embodiments of this application, the "protagonist" may be defined as a focusing object, and the focusing object may also be referred to as a protagonist object, a tracking target, a tracking object, a focusing target, or the like. A concept of the "protagonist" is not limited in embodiments of this application.

For ease of understanding, the protagonist mode in the capturing modes is described below with reference to the accompanying drawings.

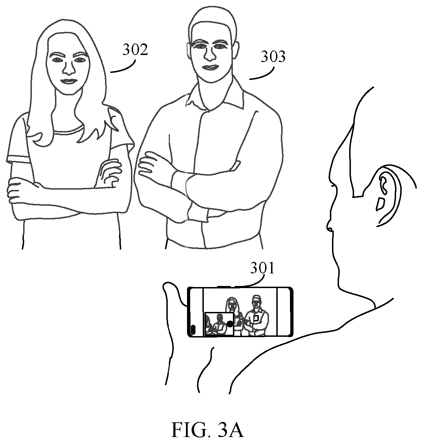

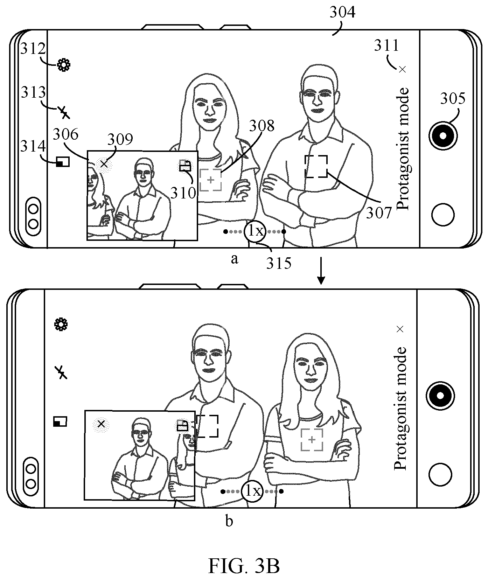

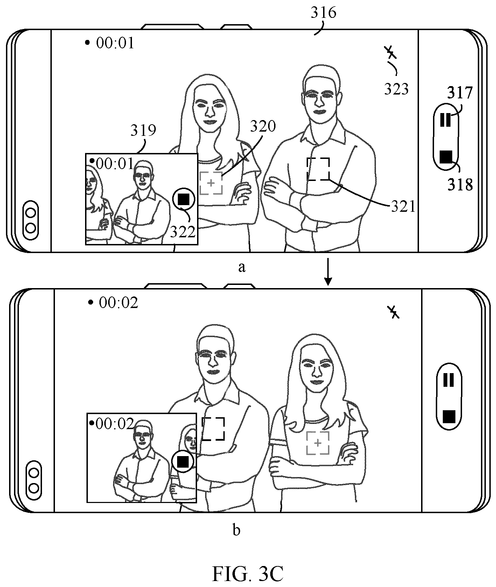

For example, FIG. 3A is a schematic diagram of an application scenario according to an embodiment of this application. As shown in FIG. 3A, the application scenario includes a terminal device 301, a character 302, and a character 303.

The terminal device 301 may record, through a camera, a video including a tracking target. The tracking target may be any character recorded through the camera, or may be any object such as an animal or a vehicle. In the scenario shown in FIG. 3A, the tracking target may be the character 302 in a capturing picture, or may be the character 303 in the capturing picture.

In the protagonist mode, the terminal device may additionally obtain one or more focusing videos corresponding to the tracking target while recording a video.

Specifically, when the terminal device 301 may receive an operation of a user to set the tracking target during previewing through the protagonist mode, the terminal device 301 may additionally generate, after starting to record the video, one or more focusing videos based on the tracking target. For example, the terminal device 301 may set the character 302 in the capturing picture as the tracking target, or may set the character 303 in the capturing picture as the tracking target.

Alternatively, when the terminal device 301 receives the operation of the user to set the tracking target during recording through the protagonist mode, the terminal device 301 may additionally generate one or more focusing videos based on the tracking target. In this way, the focusing video corresponding to the tracking target can be obtained without manual editing on the entire video.

It may be understood that, in a video recording process, the terminal device may perform one or more switching on the character corresponding to the tracking target. Specifically, when the terminal device receives an operation of the user to switch the tracking target, the terminal device switches the character corresponding to the tracking target.

In a possible implementation, when the character corresponding to the tracking target is switched, the focusing video obtained by the terminal device has different characters.

For example, when the terminal device detects, in the recording process, that the user switches the tracking target from the character 302 to the character 303, the terminal device displays a tracking picture based on the character 303. After the recording ends, in the focusing video generated based on the tracking target, the tracking target before the switching is correspondingly displayed as the character 302; and the tracking target after the switching is correspondingly displayed as the character 303. It may also be understood that, the tracking target before the switching corresponds to the character 302, and the tracking target after the switching corresponds to the character 303.

Specifically, an example in which the terminal device detects, at a 3rd second in a recording process of the focusing video, that the user switches the tracking target from the character 302 to the character 303 is used. In the focusing video generated based on the tracking target, the character 302 is displayed in the focusing video before the 3rd second; and the character 303 is displayed in the focusing video after the 3rd second. In this way, the terminal device may switch the tracking target, to implement switching of characters in the focusing video, thereby improving user experience.

In another possible implementation, when the character corresponding to the tracking target is switched, the terminal device may obtain a focusing video based on the tracking target before the switching, and obtain another focusing video based on the tracking target after the switching.

For example, when the terminal device detects, in the recording process, that the user switches the tracking target from the character 302 to the character 303, the terminal device generates a focusing video 1 based on the character 302, and generates a focusing video 2 based on the character 303 after the tracking target is switched to the character 303.

In some embodiments, in a video recording process, the terminal device may alternatively start and end recording a focusing video a plurality of times, to additionally generate a plurality of focusing videos.

For example, in a recording process of a video 1, when the terminal device receives an operation of the user to end tracking the character 303, the terminal device may generate a focusing video 2 based on the character 303. When the terminal device receives an operation of the user to track the character 302 after the operation of ending tracking the character 303, the terminal device 301 may additionally generate a focusing video 3 based on the character 302. In this case, in addition to the video 1 obtained through normal recording, the terminal device additionally generates two focusing videos (namely, the focusing video 2 and the focusing video 3). A quantity of focusing videos is not limited in this embodiment of this application.

In this way, the terminal device can start and end recording a focusing video a plurality of times, and generate a plurality of focusing videos based on the tracking target, thereby improving user experience.

It should be noted that, in the scenario shown in FIG. 3A, the video recorded by the terminal device through the camera includes two characters. The video of the terminal device may include more or fewer characters. A quantity of characters recorded by the terminal device is not specifically limited in this embodiment of this application.

It should be noted that, when the terminal device does not receive the operation of the user to set the tracking target during previewing and recording through the protagonist mode, the terminal device may obtain a video when ending recording. When the terminal device receives an operation of the user to close a small window after receiving the operation of the user to set the tracking target during previewing through the protagonist mode, the terminal device cancels tracking the tracking target. If the operation of the user to set the tracking target is not received during recording, the terminal device may obtain a video when ending recording.

It may be understood that, the protagonist mode may be set in an application having a capturing function such as a camera. After the terminal device enters the protagonist mode, implementation of the protagonist mode may include a preview mode and a recording mode.

It should be noted that, interfaces displayed by the terminal device in the preview mode (before recording) and the recording mode (during recording) each may be referred to as preview interfaces; pictures displayed in a preview interface in the preview mode (before recording) are not for generating a video and storing; and pictures displayed in a preview interface in the recording mode (during recording) may be for generating a video and storing. For ease of distinguishing, in the following description, a preview interface in the preview mode (before recording) is referred to as a preview interface; and a preview interface in the recording mode (during recording) is referred to as a recording interface.

In the preview mode of the protagonist mode, the terminal device may display an image (a preview picture) obtained through the camera in a preview region, and display an image (a tracking picture) of the tracking target selected by the user in the small window. In the preview mode, the terminal device may not generate a video, or may not store content displayed in the preview region and content displayed in the small window.

For example, the preview interface of the protagonist mode in the terminal device may be shown in FIG. 3B. The preview interface includes a preview region 304 and a recording control 305.

A preview picture is displayed in the preview region 304. When the terminal device recognizes that the preview picture includes a character, a tracking box (for example, a tracking box 307 and a tracking box 308) is displayed in the preview region. The tracking box can prompt the user that a corresponding character can be set or switched to the tracking target, and can also facilitate the user to set or switch the tracking target. When the terminal device recognizes that the preview picture includes a plurality of characters, a plurality of tracking boxes may be displayed in the preview region. A quantity of tracking boxes is less than or equal to a quantity of characters recognized by the terminal device. The tracking target is any one of a plurality of characters corresponding to tracking boxes in the preview picture. The tracking target may be referred to as a focusing object, a protagonist object, or the like, which is not limited in this embodiment of this application.

In some embodiments, a tracking box (for example, the tracking box 307) corresponding to a character set as the tracking target and a tracking box (for example, the tracking box 308) corresponding to a character not set as the tracking target have different display patterns. In this way, the user can distinguish and recognize the tracked character (the tracking target). In addition to different patterns of tracking boxes, colors of the tracking boxes may also be set in this embodiment of this application. For example, the tracking box 307 and the tracking box 308 have different colors. In this way, the tracking target and other characters can be intuitively distinguished.

The tracking box may be a dashed box, for example, the tracking box 307; or may be a combination of a dashed box and "+", for example, the tracking box 308. The tracking box may alternatively be in any display form, as long as the tracking box can meet a function that the tracking box can be triggered by the user to implement tracking and can be set as the tracking target. The tracking box may be marked at any position of a character that can be set as the tracking target, which is not specifically limited in this embodiment of this application.

It may be understood that, the tracking box is a tracking identity, and the terminal device may alternatively display a tracking identity in another form, to facilitate the user to set the tracking target. For example, the tracking identity in another form may be a thumbnail of an object, a number, a letter, a graphic, or the like. In addition, the tracking identity may be set at any position of the object, or near the object, or at an edge of the preview region. A specific position of the tracking identity is not specifically limited in this embodiment of this application.

For example, the terminal device may arrange and display thumbnails of one or more objects at an edge of the preview region. When the terminal device receives an operation of the user to click on any tracking identity, an object corresponding to the tracking identity that is clicked on is set as the tracking target.

In a possible implementation, the terminal device may recognize a character through a face recognition technology, and display a tracking box. The terminal device may determine a display position of the tracking box based on a technology such as human body recognition, for example, a more central position of the character's body. In this way, by calculating the position of the tracking box based on a human body, a situation in which the tracking box is located on a face can be reduced, and occlusion of the face by the tracking box can be reduced, thereby improving user experience. Technologies used to recognize the character and calculate the position of the tracking box are not specifically limited in this embodiment of this application.

In some embodiments, FIG. 3B further includes a small window 306. A tracking picture is displayed in the small window 306. The tracking picture corresponds to the tracking target. When the tracking target is switched, a character in the tracking picture displayed in the small window 306 is switched. For example, if the tracking target is switched from the character corresponding to the tracking box 307 to the character corresponding to the tracking box 308, the tracking picture displayed in the small window 306 also changes correspondingly.

The tracking picture may be a part of the preview picture. In a possible implementation, the tracking picture is obtained by the terminal device cropping the preview picture in real time based on a specified proportion and the tracking target. The picture displayed in the small window is not specifically limited in this embodiment of this application.

In some embodiments, a specification, a position, and a landscape/portrait display manner of the small window are adjustable, and the user can adjust a pattern of the small window based on a video recording habit.

Optionally, the tracking target is displayed in the center of the tracking picture.

Optionally, the small window floats above the recording region, which is not limited herein.

In some embodiments, the small window 306 further includes a close control 309 and a first switching control 310.

It may be understood that, after the terminal device receives the operation of the user to set the tracking target, the small window is displayed in the preview interface, to display the tracking picture of the tracking target. When the terminal device does not receive the operation of the user to set the tracking target, the small window is not displayed in the preview interface.

When the user triggers the close control 309 through an operation such as clicking or touching in the preview interface shown in FIG. 3B, the terminal device receives an operation of closing the small window, and the terminal device closes the small window and cancels previewing the tracking target.

When the user triggers the first switching control 310 through an operation such as clicking or touching in the preview interface shown in FIG. 3B, the terminal device receives an operation of switching a display manner of the small window (a pattern of the small window), and the terminal device switches the pattern of the small window. Specifically, the small window may be switched from a horizontal state to a vertical state, or from the vertical state to the horizontal state.

When the user triggers the recording control 305 through an operation such as clicking or touching in the preview interface shown in FIG. 3B, the terminal device receives an operation of starting to record, and starts to record a video and a focusing video.

Optionally, the preview interface may further include other controls, such as a protagonist mode exit control 311, a setting control 312, a flash control 313, a second switching control 314, and a zoom control 315.

When the protagonist mode exit control 311 is triggered, the terminal device exits the protagonist mode and enters a video recording mode. When the setting control 312 is triggered, the terminal device may adjust various setting parameters. The setting parameters include, but not limited to: whether to turn on a watermark, a storage path, an encoding manner, whether to store a geographical position, and the like. When the flash control 313 is triggered, the terminal device may set a flash effect, for example, control the flash to be forced on, forced off, turned on when photographing, turned on based on environmental adaptability, and the like. When the zoom control 315 is triggered, the terminal device may adjust a focal length of the camera, to adjust a magnification of the preview picture.

When the user triggers the second switching control 314 through an operation such as clicking or touching in the preview interface shown in FIG. 3B, the terminal device receives an operation of setting a pattern of the small window, and displays a small window pattern option for selection of the user. The small window pattern option includes, but not limited to: a horizontal state, a vertical state, or the like. This is not limited in this embodiment of this application. In a possible implementation, the second switching control 314 corresponds to the display pattern of the small window, to facilitate the user to distinguish the pattern of the small window.

It should be noted that, in the preview interface shown in FIG. 3B, switching of the pattern of the small window may be controlled through the first switching control 310, or switching of the pattern of the small window may be controlled through the second switching control 314. In a possible implementation, the first switching control 310 in the small window and the second switching control 314 in the preview region may be linked. For example, when the small window is switched from the horizontal state to the vertical state, an icon of the first switching control 310 is a pattern during vertical previewing, and an icon of the second switching control 314 is also a pattern during vertical previewing; or the icons of the first switching control 310 and the second switching control 314 are both patterns during horizontal previewing, to prompt the user to click on again a preview pattern after the switching.

It may be understood that, in a preview scenario, after the terminal device sets the tracking target, the tracking target may be displayed in the center of a tracking picture of the small window. In some scenarios, the tracking target may be in a moving state. When the tracking target moves but does not leave the camera, the tracking target may be continuously displayed in the center of the tracking picture of the small window.

For example, in the preview interface, it may be set that tracking target objects include a male character and a female character. In response to a click operation of the user for a tracking box of the male character, the terminal device sets the male character as the tracking target and enters an interface shown in a of FIG. 3B. In the interface shown in a of FIG. 3B, the male character is displayed in the center of the tracking picture of the small window, and the male character is located on a right side of the female character. When the male character moves, the terminal device may continuously focus the male character, and display the male character in the center of the small window. When the male character moves to a left side of the female character, the interface of the terminal device may be shown in b of FIG. 3B. In the interface shown in b of FIG. 3B, the male character is still displayed in the center of the tracking picture of the small window, and the male character is located on the left side of the female character.

In a possible implementation, when the terminal device tracks a target, a focus moves with the tracking target. For example, in the interface shown in a of FIG. 3B, the focus is located on a face region of the male character, and is located in a right part of the middle of the picture. When the male character moves, the terminal device may continuously focus the male character. When the male character moves to the left side of the female character, the interface of the terminal device may be shown in b of FIG. 3B. In the interface shown in b of FIG. 3B, the focus is located on the face region of the male character, and is located in a left part of the middle of the picture.

In the recording mode of the protagonist mode, the terminal device may display an image (a recording picture) obtained through the camera in a recording region, display an image (a tracking picture) of the tracking target selected by the user in the small window, and generate a recorded video and a focusing video obtained through recording after the recording mode is turned on. When ending recording, the terminal device stores a video generated based on the recording picture and a focusing video generated based on the tracking picture.

In some embodiments, compared with recording of the recording region, recording of the small window may be ended in advance. When ending recording of the small window, the terminal device stores a focusing video generated based on the tracking picture. Alternatively, it may be understood that, compared with the entire video, the terminal device may end recording a focusing video in advance.

In some embodiments, compared with recording of the recording region, recording of the small window may be delayed to be started. Alternatively, it may be understood that, when the terminal device detects the operation of the user to set the tracking target after starting to record a video, the terminal device turns on the small window, and starts to record a focusing video.

For example, the recording interface of the protagonist mode in the terminal device may be shown in FIG. 3C. The recording interface includes a recording region 316, a pause control 317, and an end control 318.

A recording picture and recording duration are displayed in the recording region 316. When the terminal device recognizes that the recording picture includes a character, a tracking box (for example, a tracking box 320 and a tracking box 321) is displayed in the recording region. It may be understood that, a quantity of tracking boxes is less than or equal to a quantity of characters recognized by the terminal device.

In some embodiments, a small window 319 is further displayed in the recording interface. A tracking picture is displayed in the small window 319. The tracking picture corresponds to the tracking target. When the tracking target is switched, a character in the tracking picture displayed in the small window 319 is switched. For example, if the tracking target is switched from the character corresponding to the tracking box 320 to the character corresponding to the tracking box 321, the tracking picture displayed in the small window 319 also changes correspondingly.

The tracking picture may be a part of the recording picture. In a possible implementation, the tracking picture is obtained by cropping the recording picture in real time based on a specified proportion and the tracking target. The picture displayed in the small window is not specifically limited in this embodiment of this application.

Optionally, the tracking target is displayed in the center of the tracking picture.

Optionally, the small window floats above the recording region, which is not limited herein.

The small window 319 further includes a small window end control 322 and small window recording duration.

It may be understood that, after the terminal device receives the operation of the user to set the tracking target, the small window is displayed in the recording interface, to display the tracking picture of the tracking target. When the terminal device does not receive the operation of the user to set the tracking target, the small window is not displayed in the recording interface.

When the user triggers the end control 318 through an operation such as clicking or touching in the recording interface shown in FIG. 3C, the terminal device receives an operation of the user to end recording; and the terminal device enters the preview interface of the protagonist mode, and stores a video corresponding to the recording picture and a focusing video corresponding to the tracking picture.

When the user triggers the pause control 317 through an operation such as clicking or touching in the recording interface shown in FIG. 3C, the terminal device receives an operation of the user to pause recording, and the terminal device pauses recording a video in the recording region 316 and recording a focusing video in the small window 319.

When the user triggers the small window end control 322 through an operation such as clicking or touching in the recording interface shown in FIG. 3C, the terminal device receives an operation of the user to end recording the small window; and the terminal device continues to display the recording picture in the recording region 316, and closes the small window 319 and stores a focusing video corresponding to the tracking picture in the small window 319.

In a possible implementation, the recording interface further includes a flash control 323. When the flash control 323 is triggered, the terminal device may set a flash effect.

It may be understood that, during recording through the protagonist mode, the terminal device may generate a video based on the recording picture of the recording region, and additionally generate a focusing video corresponding to the tracking target based on a tracking picture of the small window. The two videos are independently stored in the terminal device. In this way, the video corresponding to the tracking target can be obtained without subsequent manual editing on the entire video, and the operation is simple and convenient, thereby improving user experience.

It may be understood that, in a recording scenario, after the terminal device sets the tracking target, the tracking target may be displayed in the center of the tracking picture of the small window. In some scenarios, the tracking target may be in a moving state. When the tracking target moves but does not leave the camera, the tracking target may be continuously displayed in the center of the tracking picture of the small window.

For example, in the preview interface, it may be set that tracking target objects include a male character and a female character. In response to a click operation of the user for a tracking box of the male character, the terminal device sets the male character as the tracking target and enters an interface shown in a of FIG. 3C. In the interface shown in a of FIG. 3C, the male character is displayed in the center of the tracking picture of the small window, and the male character is located on a right side of the female character. When the male character moves, the terminal device may continuously focus the male character, and display the male character in the center of the small window. When the male character moves to a left side of the female character, the interface of the terminal device may be shown in b of FIG. 3C. In the interface shown in b of FIG. 3C, the male character is still displayed in the center of the tracking picture of the small window, and the male character is located on the left side of the female character.

In a possible implementation, when the terminal device tracks a target, a focus moves with the tracking target. For example, in the interface shown in a of FIG. 3C, the focus is located on a face region of the male character, and is located in a right part of the middle of the picture. When the male character moves, the terminal device may continuously focus the male character. When the male character moves to the left side of the female character, the interface of the terminal device may be shown in b of FIG. 3C. In the interface shown in b of FIG. 3C, the focus is located on the face region of the male character, and is located in a left part of the middle of the picture.

It may be understood that, in embodiments of this application, a capturing mode in which one or more focusing videos may be additionally generated based on a tracking target is defined as a protagonist mode, and the capturing mode may also be referred to as a focusing mode or the like. This is not limited in this embodiment of this application.

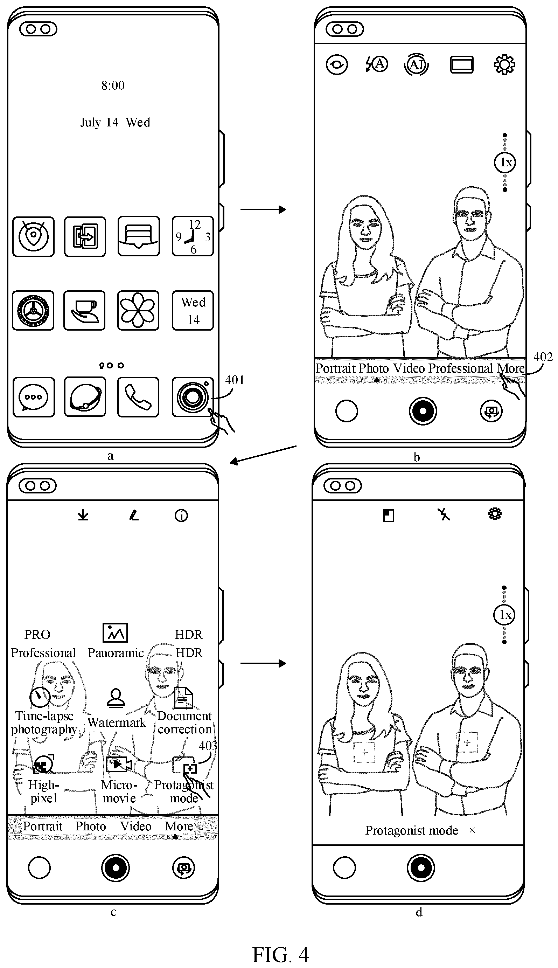

The following describes an entering manner of the protagonist mode in the terminal device and interfaces involved in recording with reference to FIG. 4 to FIG. 7.

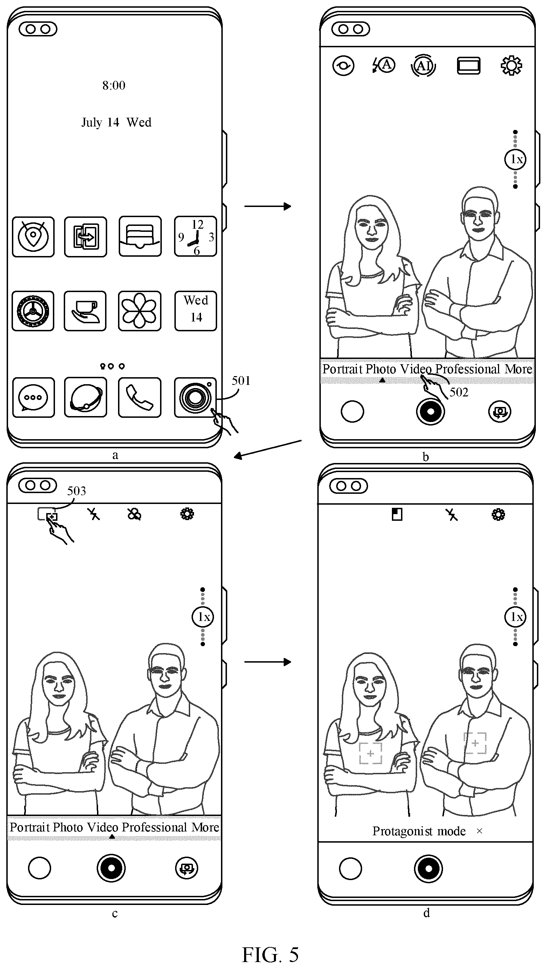

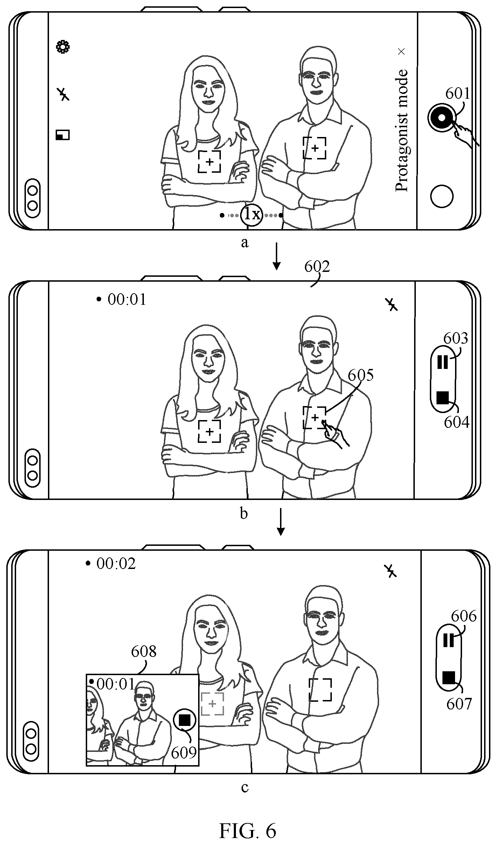

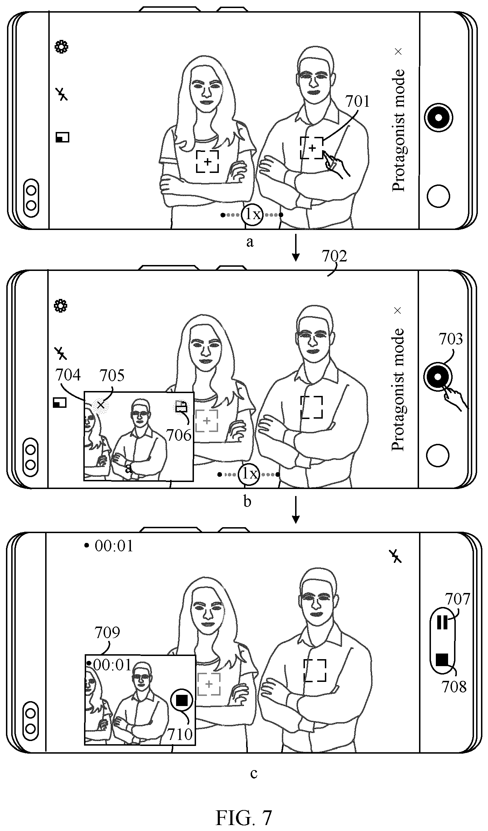

FIG. 4 and FIG. 5 are two schematic flowcharts of entering a protagonist mode according to an embodiment of this application. FIG. 6 and FIG. 7 are schematic diagrams of interfaces involved in recording according to an embodiment of this application.

For example, FIG. 4 is a schematic diagram of an interface in which a terminal device enters a protagonist mode according to an embodiment of this application.

When the terminal device receives an operation of a user to start a camera application program 401 in a main interface shown in a of FIG. 4, the terminal device may enter a photographing preview interface shown in b of FIG. 4. The photographing preview interface may include a preview region and a capturing mode option. A preview picture is displayed in the preview region in real time. The capturing mode option includes, but not limited to: portrait, photo, video, professional, or more 402.

When the user triggers the more 402 through an operation such as clicking or touching in a camera preview interface shown in b of FIG. 4, the terminal device receives an operation of the user to view a capturing mode of another type, and enters a capturing mode selection interface shown in c of FIG. 4. The capturing mode selection interface includes a capturing mode option. The capturing mode option includes, but not limited to: professional, panoramic, high-dynamic-range (high-dynamic-range, HDR) image, time-lapse photography, watermark, document correction, high-pixel, micro-movie, a protagonist mode 403, or a capturing mode option of another type.

When the user triggers the protagonist mode 403 through an operation such as clicking or touching in the capturing mode selection interface shown in c of FIG. 4, the terminal device receives an operation of the user to select to preview the protagonist mode, and enters a preview interface corresponding to the protagonist mode shown in d of FIG. 4. The preview interface includes a preview region and a recording control. A preview picture is displayed in the preview region. When the preview picture includes a character, a tracking box is further displayed in the preview region. When the user triggers the tracking box through a click or touch operation, the terminal device receives an operation of setting a tracking target, sets the character corresponding to the tracking box as the tracking target, and displays, through a small window, a tracking picture corresponding to the tracking target in a display interface.

For example, FIG. 5 is another schematic diagram of an interface in which a terminal device enters a protagonist mode according to an embodiment of this application.

When the terminal device receives an operation of a user to start a camera application program 501 in a main interface shown in a of FIG. 5, the terminal device may enter a photographing preview interface shown in b of FIG. 5. The photographing preview interface may include a preview region and a capturing mode option. A preview picture is displayed in the preview region in real time. The capturing mode option includes, but not limited to: portrait, photo, video 502, professional, or a capturing mode option of another type.

When the user triggers the video 502 through an operation such as clicking or touching in a camera preview interface shown in b of FIG. 5, the terminal device receives an operation of the user to select to preview the video, and enters a video preview interface shown in c of FIG. 5. The video preview interface includes a preview region, a recording parameter option, and a capturing mode option. A preview picture is displayed in the preview region in real time. The recording parameter option includes, but not limited to: a protagonist mode 503, a flash, filters, settings, or a recording parameter option of another type. The capturing mode option includes, but not limited to: portrait, photo, video, professional, or a capturing mode option of another type.

When the user triggers the protagonist mode 503 through an operation such as clicking or touching in the video preview interface in c of FIG. 5, the terminal device receives an operation of the user to select to preview the protagonist mode, and enters a preview interface corresponding to the protagonist mode shown in d of FIG. 5. The preview interface includes a preview region and a recording control. A preview picture is displayed in the preview region. When the preview picture includes a character, a tracking box is further displayed in the preview region. When the user triggers the tracking box through a click or touch operation, the terminal device receives an operation of setting a tracking target, sets the character corresponding to the tracking box as the tracking target, and displays, through a small window, a tracking picture corresponding to the tracking target in a display interface.

It may be understood that, when the terminal device enters the protagonist mode, the terminal device may be placed horizontally in a landscape state, or may be placed vertically in a portrait state. In the landscape state or the portrait state, a principle of the terminal device implementing the protagonist mode is similar. In the following embodiments, an example in which the terminal device performs landscape recording is used to describe a plurality of application scenarios of the protagonist mode.

It may be understood that, in the protagonist mode of the camera, the terminal device may select a tracking target after starting to record, or may select a tracking target before starting to record a video. Two recording procedures are respectively described below with reference to FIG. 6 and FIG. 7. For example, FIG. 6 is a schematic diagram of an interface corresponding to a recording procedure of a protagonist mode according to an embodiment of this application.

When the user triggers a recording control 601 through an operation such as clicking or touching in a preview interface shown in a of FIG. 6, the terminal device receives an operation of starting to record, and enters a recording interface shown in b of FIG. 6. The recording interface includes a recording region 602, a pause control 603, and an end control 604. A recording picture and a tracking box 605 are displayed in the recording region. The tracking box 605 can facilitate the user to select a tracking target.

When the user triggers a tracking box 605 through an operation such as clicking or touching in the recording interface shown in b of FIG. 6, the terminal device receives an operation of the user to set the tracking target, and the terminal device enters a recording interface shown in c of FIG. 6. The recording interface includes a recording region, a pause control 606, an end control 607, and a small window 608. A recording picture is displayed in the recording region. The small window 608 includes a small window end control 609. A tracking picture corresponding to the tracking target is displayed in the small window 608. The tracking picture corresponding to the tracking target is a part of the recording picture.

Based on the procedure shown in FIG. 6, when the user triggers the pause control 606 through an operation such as clicking or touching in the recording interface shown in c of FIG. 6, the terminal device receives an operation of pausing recording a video; and recording of the video is paused, and recording of a focusing video corresponding to the small window is also paused.

When the user triggers the end control 607 through an operation such as clicking or touching in the recording interface shown in c of FIG. 6, the terminal device receives an operation of end recording a video; and recording of the video is ended, and recording of a focusing video corresponding to the small window is also ended.

When the user triggers the small window end control 609 through an operation such as clicking or touching in the recording interface shown in c of FIG. 6, the terminal device receives an operation of ending recording a focusing video; and recording of the focusing video corresponding to the small window is ended, and recording of a video is continued.

When the user triggers the small window 608 through a drag operation in the recording interface shown in c of FIG. 6, a position of the small window 608 is movable.

A movement distance of the small window 608 is related to a distance between a start position of the drag operation and an end position of the drag operation, and a movement direction of small window 608 is related to a direction of the drag operation.

For example, FIG. 7 is a schematic diagram of an interface corresponding to a recording procedure of a protagonist mode according to an embodiment of this application.

When the user triggers a tracking box 701 through an operation such as clicking or touching in a preview interface shown in a of FIG. 7, the terminal device receives an operation of the user to set a tracking target, and enters a preview interface shown in b of FIG. 7. The preview interface includes a preview region 702, a recording control 703, and a small window 704. A preview picture is displayed in the recording region. A tracking picture is displayed in the small window 704. The tracking picture corresponds to the tracking target. The small window 704 further includes a close control 705 and a first switching control 706.

When the user triggers the recording control 703 through an operation such as clicking or touching in the preview interface shown in b of FIG. 7, the terminal device receives an operation of starting to record, and enters a recording interface shown in c of FIG. 7. The recording interface includes a recording region, a pause control 707, an end control 708, and a small window 709. A recording picture is displayed in the recording region. The small window 709 includes a small window end control 710. A tracking picture is displayed in the small window 709. The tracking picture corresponds to the tracking target. The tracking picture is a part of the recording picture.

For action of the pause control 707, the end control 708, and the small window 709, refer to related description in FIG. 6. Details are not described herein again.

Based on the procedure shown in FIG. 7, when the user triggers the close control 705 through an operation such as clicking or touching in the preview interface shown in b of FIG. 7, the terminal device receives an operation of closing the small window, and the terminal device closes the small window and cancels previewing the tracking target.

When the user triggers the recording control the first switching control 706 through an operation such as clicking or touching in the preview interface shown in b of FIG. 7, the terminal device receives an operation of switching a display manner of the small window, and the terminal device switches the display manner of the small window. Specifically, the small window may be switched from a horizontal state to a vertical state, or from the vertical state to the horizontal state.

In a possible implementation, the terminal device may further adjust a size of the small window. A specific implementation for adjusting the size of the small window is not limited in this embodiment of this application.

The terminal device may start to record a focusing video in the small window based on the foregoing scenarios, and obtain a plurality of videos. It should be noted that, a picture related to the tracking target in the preview region/recording region may be displayed in the small window. However, a video recorded in the small window and a video recorded in the recording region are a plurality of independent videos, rather than apicture-in-picture composite video in which the tracking picture in the small window is nested in the recording picture of the recording region.

It should be noted that, if the terminal device does not start recording of the small window, the terminal device may obtain a video recorded in the recording region. If the terminal device starts recording of the small window, the terminal device may obtain a video recorded in the recording region and one or more videos recorded in the small window. For example, during recording a video in the recording region, the terminal device may start recording of the small window a plurality of times. When the terminal device detects a click operation for the small window end control, the terminal device may end recording of the small window, and obtain a video. After recording of the small window is started again, the terminal device may obtain a new video. A quantity of videos obtained by the terminal device based on the small window may be related to a quantity of times that recording of the small window is started.

Optionally, the user may browse the video recorded in the recording region and a plurality of videos recorded in the small window based on a gallery of the camera application. Display order of the plurality of videos may be recording order of the videos, that is, the terminal device may sort the videos based on end time points or start time points of the recorded videos. Optionally, the display order of the plurality of videos may alternatively be reverse recording order of the videos, that is, the terminal device may sort the videos in reverse order based on end time or start time of the recorded videos.

Optionally, the video recorded in the recording region and the video recorded in the small window may be displayed in video thumbnails on a same gallery interface. For ease of distinguishing the video recorded in the recording region and the video recorded in the small window, the terminal device may set an identity for the video recorded in the small window. For example, the terminal device may add an outer border, font, graphics, or the like for the video recorded in the small window. The terminal device may also set a size of a thumbnail of the video recorded in the small window, so that there is a size difference between the thumbnail of the video recorded in the small window and a thumbnail of the video recorded in the recording region. It may be understood that, forms of thumbnails of videos, sorting order of the thumbnails of the videos, storage order of the videos, and the like in the gallery are not limited in this embodiment of this application.

It may be understood that, the terminal device changes clarity and brightness of a capturing picture of the terminal device by adjusting a focus and an exposure point. The focus may be understood as a clearest and non-blurred position in the capturing picture. The exposure point may be understood as a base point or reference point for determining overall brightness of the capturing picture. The exposure point may also be referred to as a metering point. In a same scenario, when a position of an exposure point changes, an exposure parameter and brightness corresponding to a capturing picture change.

In a possible design, a position of the focus and a position of the exposure point are the same. When the terminal device automatically adjusts the focus and the exposure point, if the focus is at a strong light source position or a darker position, overexposure or underexposure may occur in the capturing picture. When the terminal device locks exposure, the position of the focus is also locked. In this way, the terminal device cannot implement focusing control, and it is possible that the tracking target is not clearly captured.

Based on this, an embodiment of this application provides a separate control solution for a focus and an exposure point, where a position of the focus and a position of the exposure point may be different. In this way, the exposure point may not change with the position of the focus, so that overexposure or underexposure caused when the focus is at a strong light source position or a darker position can be reduced. In addition, when a terminal device locks exposure, the position of the focus is not affected, so that focusing control can be implemented.

The solution provided in this embodiment of this application may be applied to a protagonist mode. Specifically, in the protagonist mode, the terminal device may independently control the exposure point, the exposure point does not change with the position of the focus, and an exposure parameter does not change with the position of the focus, so that overexposure or underexposure caused when the focus is at a strong light source position or a darker position can be reduced.

In addition, when the terminal device locks the exposure, the position of the focus is unlocked, so that automatic focusing control can be implemented. When the exposure is locked, the exposure parameter (an aperture, a shutter speed, sensitivity ISO, or the like) is fixed, or an EV (Exposure Value, exposure parameter) value is locked; and the exposure parameter does not change with light, and brightness of a capturing picture is more stable, thereby reducing flickering.

It should be noted that, in the protagonist mode, when the terminal device does not set a tracking target, the terminal device may automatically adjust the position of the focus based on the capturing picture. If the terminal device sets the tracking target, the focus corresponds to the tracking target; and when the tracking target moves, the position of the focus also moves accordingly. In this way, the terminal device can clearly display the tracking target.

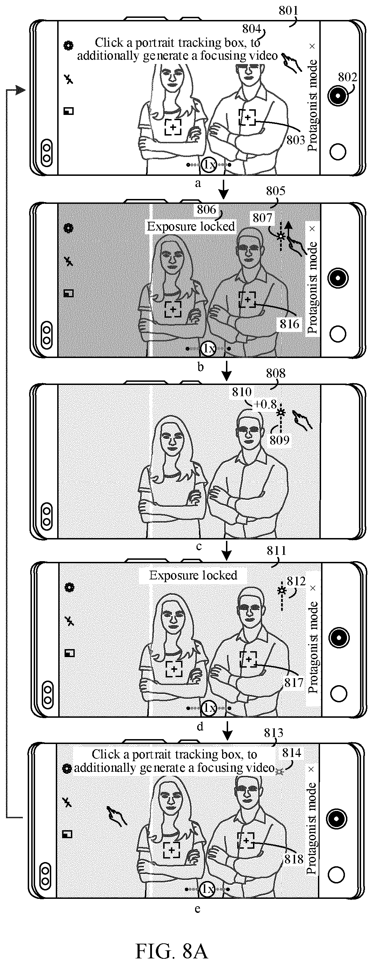

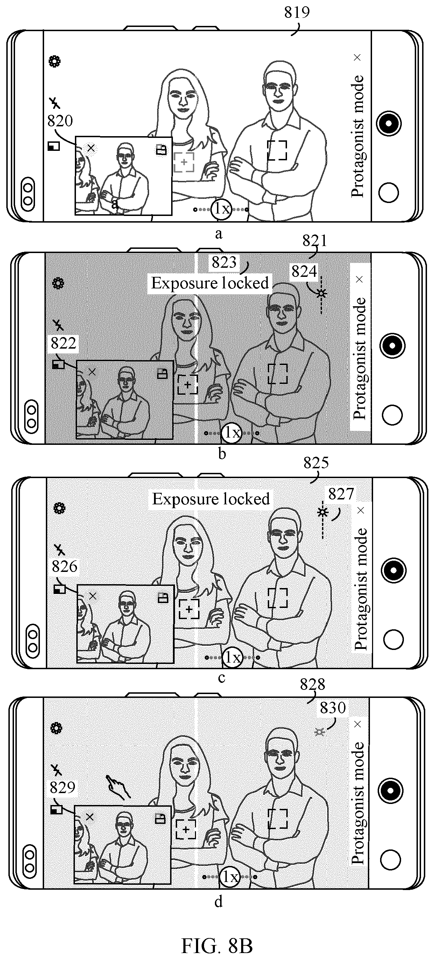

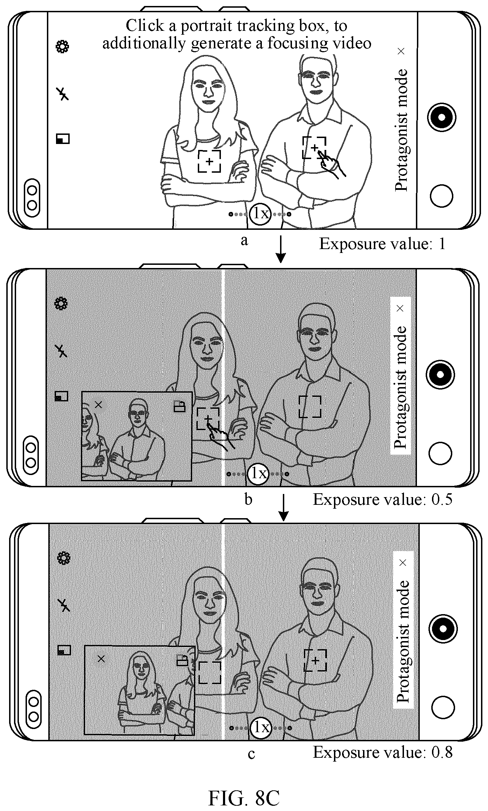

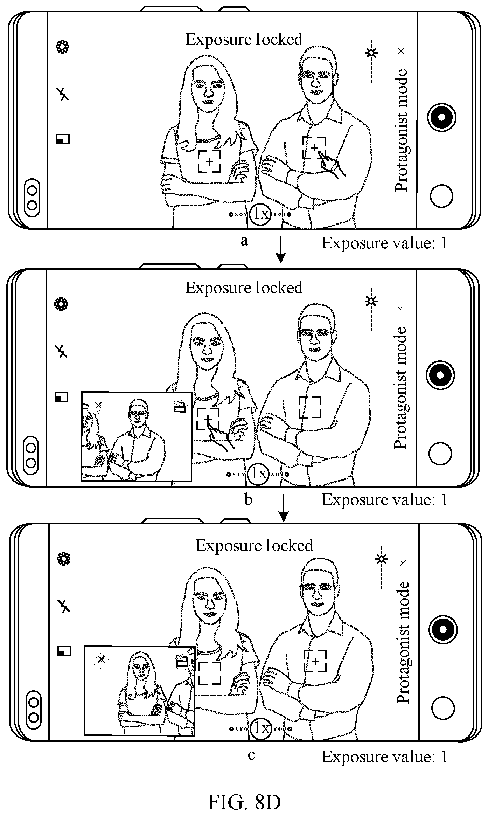

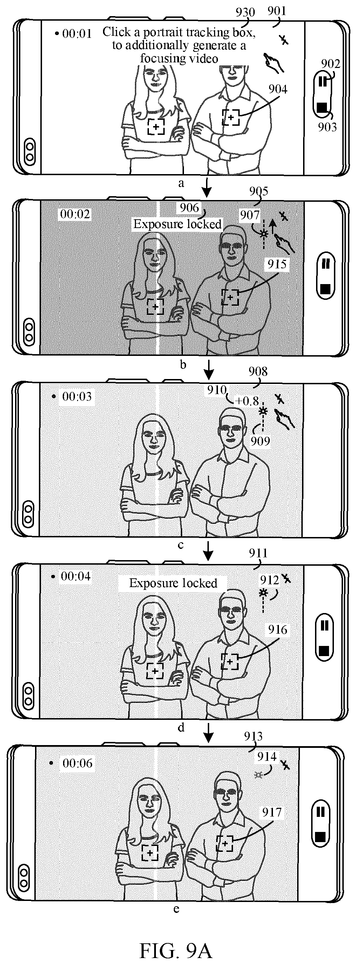

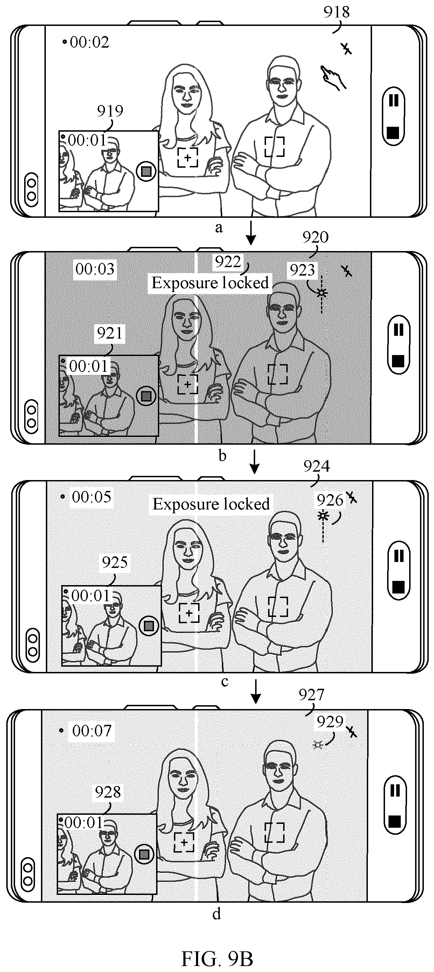

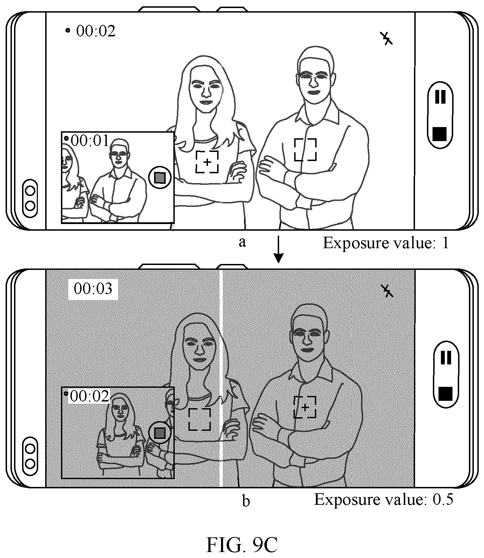

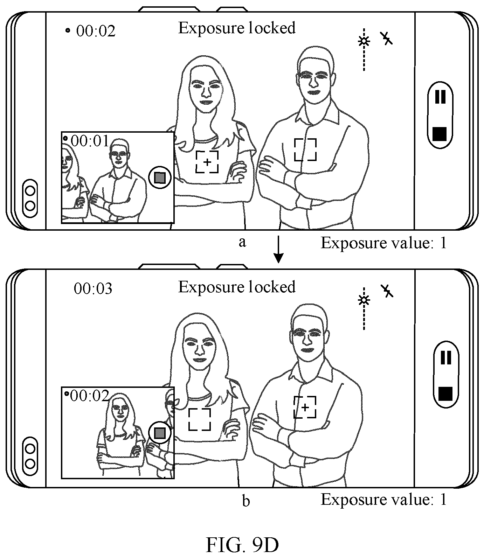

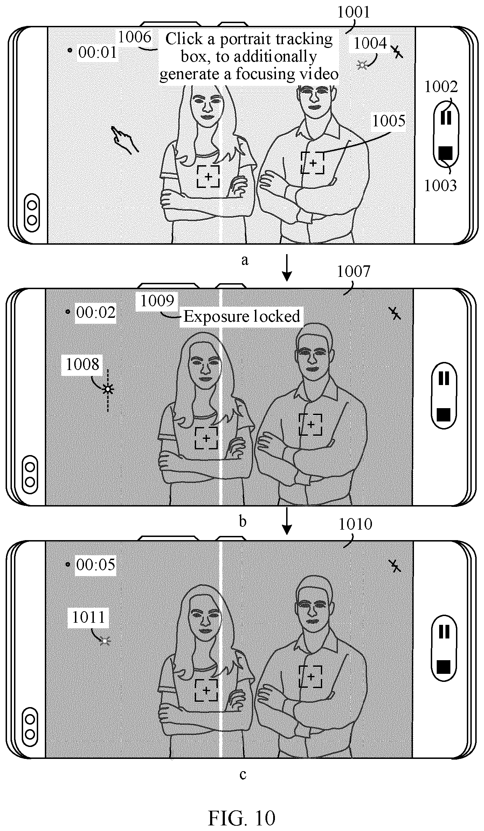

Adjustment of the exposure parameter in the protagonist mode is described below with reference to FIG. 8A to FIG. 10. FIG. 8A to FIG. 8D are schematic diagrams of a process of adjusting an exposure parameter in a preview scenario. FIG. 9 and FIG. 10 are schematic diagrams of a process of adjusting an exposure parameter in a recording scenario.

For example, FIG. 8A is a schematic diagram of an interface of a terminal device according to an embodiment of this application. An example in which a preview picture includes a character is used.

When the terminal device receives an operation indicating a preview of the protagonist mode, the terminal device may enter a preview interface shown in a of FIG. 8A. The preview interface includes a preview region 801, a recording control 802, a tracking box, and a tracking prompt 804. A preview picture is displayed in the preview region 801.

The tracking box is for prompting that someone can be set as a tracking target. For example, when the terminal device receives an operation of clicking a tracking box 803, the terminal device sets a character corresponding to the tracking box 803 as the tracking target, and displays a small window with a tracking picture.

It may be understood that, a position of a tracking box is related to a character in the preview picture, and a quantity of tracking boxes is related to a quantity of characters in the preview picture. When the preview picture does not include a character, the terminal device does not display a tracking box. Details are not described herein again.

The tracking prompt 804 is for prompting a user to set the tracking target. Content of the tracking prompt 804 may be "Click a portrait tracking box, to additionally generate a focusing video". A display position, a display manner, and specific content of the tracking prompt 804 are not limited in this embodiment of this application. It may be understood that, the terminal device may not display the tracking prompt 804.

When the user presses, with a finger or a stylus, any position other than the tracking box in the preview region 801 in the preview interface shown in a of FIG. 8A, the terminal device receives a press operation, and adjusts an exposure value of the preview picture based on the pressed position. In this case, an exposure parameter changes, so that brightness of the preview picture displayed in the preview region 801 may change.

It may be understood that, when a region corresponding to the pressed position is darker, if the terminal device increases the exposure value, the brightness of the preview picture is increased. When the region corresponding to the pressed position is brighter, if the terminal device reduces the exposure value, the brightness of the preview picture is reduced.

In this way, the terminal device can independently adjust a position of an exposure point, and adjust the exposure parameter, to adaptively adjust the brightness of the preview picture.

When duration of the press operation reaches a threshold, the terminal device receives an exposure locking operation, the terminal device locks the exposure parameter, the exposure value is fixed, and the terminal device enters a preview interface shown in b of FIG. 8A. The preview interface includes a preview region 805, a recording control, an exposure locking prompt 806, and a standard bar 807. A preview picture is displayed in the preview region 805. An exposure parameter corresponding to the preview picture is related to brightness of a picture corresponding to a pressed position.

In this way, the terminal device can lock the exposure, and the exposure parameter is fixed, so that brightness of corresponding content (for example, the tracking target) in the preview picture is more stable, thereby reducing flickering.

The exposure locking prompt 806 is for prompting the user that the exposure is locked. Content of the exposure locking prompt 806 may be "Exposure locked". A display position, display content, a specific form, and the like of the exposure locking prompt are not limited in this embodiment of this application.

It may be understood that, the exposure locking prompt disappears after preset duration, or disappears after an operation indicating to release locking of the exposure is received, or disappears when the exposure is adjusted based on the standard bar.

The standard bar 807 may be a combination of a "sun" icon and a dotted line. In a possible implementation, the "sun" icon is at a middle position of the dotted line. The standard bar 807 may alternatively be in another form, for example, a combination of the "sun" icon and a solid line. This is not limited in this embodiment of this application.

It should be noted that, the standard bar is for adjusting the exposure value. When the terminal device receives a sliding operation in the interface displayed with the standard bar, the terminal device adjusts adjusts the EV value based on the sliding operation, so that the exposure parameter corresponding to the preview picture changes. In addition, the terminal device further adjusts a position of the "sun" icon in the standard bar based on the sliding operation.

In this embodiment of this application, both the position of the "sun" icon and an EV change value are related to displacement of the sliding operation in a preset direction. The preset direction may be a dotted line direction in the standard bar.

For example, when the terminal device receives an upward sliding operation of the user's finger in the preview interface shown in b of FIG. 8A, a "sun" in the standard bar moves upward, and the terminal device increases the EV value, so that the exposure parameter of the preview picture changes, and the brightness may be increased. When the terminal device receives a downward sliding operation of the user's finger in the preview interface shown in b of FIG. 8A, the "sun" in the standard bar moves downward, and the EV value is reduced, so that the exposure parameter of the preview picture changes, and the brightness may be reduced. When the terminal device receives a leftward sliding operation or a rightward sliding operation of the user's finger in the preview interface shown in b of FIG. 8A, the position of the "sun" icon in the standard bar does not change and does not move, and the terminal device does not adjust the EV value.

A preview interface during a sliding operation and a preview interface when ending the sliding operation are respectively described below with reference to c of FIG. 8A and d of FIG. 8A. An example in which the sliding operation is an upward sliding operation is used.

For example, when the terminal device receives the upward sliding operation in the preview region of the preview interface shown in b of FIG. 8A, the terminal device enters a preview interface shown in c of FIG. 8A. The preview interface includes a preview region 808 and a standard bar 809. Compared with that in the standard bar 807 in the preview interface shown in b of FIG. 8A, a sun icon in the standard bar 809 moves upward.

In a possible implementation, an EV change value 810 is further displayed in the preview interface shown in c of FIG. 8A. The EV change value 810 may be +0.8. It may be understood that, during the sliding operation, the EV change value displayed by the terminal device is related to displacement currently corresponding to the sliding operation. In some embodiments, when the terminal device receives the upward sliding operation, the terminal device does not display a tracking box.

In a possible implementation, during the sliding operation, the terminal device may alternatively set to hide some or all controls (for example, a recording control) in a displayed interface, to avoid a false trigger (as shown in c of FIG. 8A).

When ending the sliding operation, the terminal device enters a preview interface shown in d of FIG. 8A. The preview interface includes a preview region 811, a recording control, a standard bar 812, and an exposure locking prompt.

It may be understood that, the exposure locking prompt may disappear when a user operation is not received within preset duration. A position of a "sun" in the standard bar 812 is related to displacement of the sliding operation.

Based on the foregoing embodiment, when the terminal device does not receive any operation for a preview region other than a tracking box within preset duration after an exposure value is adjusted, a standard bar becomes translucent. For example, when the terminal device does not receive a user operation in the preview interface shown in d of FIG. 8A, the terminal device enters a preview interface shown in e of FIG. 8A. The preview interface includes a preview region 813 and a standard bar 814. The standard bar 814 is translucent. In a possible implementation, a tracking prompt 815 is further displayed in the preview interface shown in d of FIG. 8A.

In this way, the terminal device can hide the standard bar, and reduce interference of the standard bar with the interface, thereby optimizing the interface, and improving user experience.

In this embodiment of this application, the user operation includes, but not limited to: an operation of canceling locking of exposure, and an operation of adjusting an exposure value, for example, clicking a position other than a tracking box in a recording region, and a sliding operation.

Based on the foregoing embodiment, when the terminal device does not receive an operation of the user for a preview region other than a tracking box, the terminal device cancels locking of exposure. For example, when the user triggers any position other than a tracking box in the preview region 811 through an operation such as clicking or touching, the terminal device receives an operation of canceling locking of exposure, and enters a preview interface shown in a of FIG. 8A. A standard bar is not displayed in the preview interface. When the user triggers any position other than a tracking box in the preview region 805 through an operation such as clicking or touching, the terminal device receives an operation of canceling locking of exposure, and enters the preview interface shown in a of FIG. 8A. A standard bar and an exposure locking prompt are not displayed in the preview interface.

It may be understood that, before or after the terminal device adjusts exposure, the terminal device may also set a tracking target. Alternatively, it may be understood that, the adjustment of the exposure and the setting of the tracking target have no influence on each other.

For example, when the user triggers the tracking box 803 through an operation such as clicking in the preview interface shown in a of FIG. 8A, when the terminal device receives an operation of setting the character corresponding to the tracking box 803 as the tracking target, the terminal device enters a preview interface shown in a of FIG. 8B. The preview interface includes a preview region 819 and a small window 820. A tracking picture of the tracking target is displayed in the small window 820.

If a capturing angle of the terminal device does not change and characters and the like do not move, an exposure parameter corresponding to the preview interface shown in a of FIG. 8B and an exposure parameter corresponding to the preview interface shown in a of FIG. 8A are the same.

For example, when the user triggers a tracking box 816 through an operation such as clicking in the preview interface shown in b of FIG. 8A, when the terminal device receives an operation of setting a character corresponding to the tracking box 816 as the tracking target, the terminal device enters a preview interface shown in b of FIG. 8B. The preview interface includes a preview region 821, a small window 822, an exposure locking prompt 823, and a standard bar 824. A tracking picture of the tracking target is displayed in the small window 822. An exposure parameter corresponding to the preview interface shown in b of FIG. 8B and an exposure parameter corresponding to the preview interface shown in b of FIG. 8A are the same. After exposure is locked, a change of a focus does not affect an exposure parameter, so that picture brightness is more stable, and can remain unchanged.

For example, when the user triggers a tracking box 817 through an operation such as clicking in the preview interface shown in d of FIG. 8A, when the terminal device receives an operation of setting a character corresponding to the tracking box 817 as the tracking target, the terminal device enters a preview interface shown in c of FIG. 8B. The preview interface includes a preview region 825, a small window 826, an exposure locking prompt, and a standard bar 827. A tracking picture of the tracking target is displayed in the small window 826. Brightness of an exposure parameter corresponding to the preview interface shown in c of FIG. 8B and an exposure parameter corresponding to the preview interface shown in d of FIG. 8A are the same. After exposure is locked, a change of a focus does not affect an exposure parameter, so that picture brightness is more stable, and can remain unchanged.

A position of a "sun" icon in the standard bar 827 and the position of the "sun" icon in the standard bar 812 are the same.

For example, when the user triggers a tracking box 818 through an operation such as clicking in the preview interface shown in e of FIG. 8A, when the terminal device receives an operation of setting a character corresponding to the tracking box 818 as the tracking target, the terminal device enters a preview interface shown in d of FIG. 8B. The preview interface includes a preview region 828, a small window 829, and a standard bar 830. A tracking picture of the tracking target is displayed in the small window 829. The standard bar 830 is translucent. An exposure parameter corresponding to the preview interface shown in d of FIG. 8B and an exposure parameter corresponding to the preview interface shown in e of FIG. 8A. After exposure is locked, a change of a focus does not affect an exposure parameter, so that picture brightness is more stable, and can remain unchanged.

It may be understood that, the terminal device may set the tracking target at any time in a process of adjusting the exposure parameter; and may further adjust the exposure parameter after setting the tracking target.

For example, when the terminal device receives a press operation in the preview interface shown in a of FIG. 8B, if duration of the press operation reaches a threshold, the terminal device locks exposure, and enters the preview interface shown in b of FIG. 8B. When the terminal device receives a sliding operation in the preview interface shown in b of FIG. 8B, the terminal device adjusts an exposure value. After the sliding operation is ended, the terminal device may enter the preview interface shown in c of FIG. 8B. When the terminal device does not receive any operation for a preview region other than a tracking box within first preset duration after entering the preview interface shown in c of FIG. 8B, the terminal device enters the preview interface shown in d of FIG. 8B.

It may be understood that, the terminal device may adjust a focus based on a character in a preview picture. When a position of the character moves, a position of the focus also changes accordingly. Alternatively, the terminal device may adjust the focus based on another object (for example, a cat, a dog, or a vehicle) in the preview picture, or may automatically adjust the focus based on an entire picture. For example, the terminal device may set the focus in a face region, so that a face is clearly displayed.

For example, an exposure parameter corresponding to a preview picture before or after exposure is locked is described below with reference to FIG. 8C and FIG. 8D.

If the terminal device does not lock the exposure, the terminal device actively measures the exposure based on the focus, and an exposure value is not fixed. In this way, the exposure parameter is not fixed. When the terminal device performs capturing at a first moment, the terminal device may enter a preview interface shown in a of FIG. 8C. The preview interface includes a male character and a female character, and a corresponding exposure value is 1.

When the terminal device receives that the user clicks a tracking box corresponding to the male character, the terminal device sets the focus in a region corresponding to the male character, and adjusts the exposure value based on the region corresponding to the male character. The terminal device may enter a preview interface shown in b of FIG. 8C, and a corresponding exposure value is 0.5. A male character in the preview interface shown in b of FIG. 8C is clearer than that in the preview interface shown in a of FIG. 8C.

When the terminal device receives that the user clicks a tracking box corresponding to the female character, the terminal device sets the focus in a region corresponding to the female character, and adjusts the exposure value based on the region corresponding to the female character. The terminal device may enter a preview interface shown in c of FIG. 8C, and a corresponding exposure value is 0.8. A female character in the preview interface shown in c of FIG. 8C is clearer than that in the preview interface shown in b of FIG. 8C.

When the terminal device does not lock the exposure, the exposure changes with movement of the focus. In this way, the exposure value changes, and the exposure parameter changes. In addition, it is possible that picture brightness is unstable, causing flickering.

If the terminal device locks the exposure, when the terminal device performs capturing at a first moment, the terminal device may enter a preview interface shown in a of FIG. 8D. The preview interface includes a male character and a female character, and a corresponding exposure value is 1.

When the terminal device receives that the user clicks a tracking box corresponding to the male character, the terminal device sets the focus in a region corresponding to the male character. The terminal device may enter a preview interface shown in b of FIG. 8D, and a corresponding exposure value is 1. A male character in the preview interface shown in b of FIG. 8D is clearer than that in the preview interface shown in a of FIG. 8C.

When the terminal device receives that the user clicks a tracking box corresponding to the female character, the terminal device sets the focus in a region corresponding to the female character. The terminal device may enter a preview interface shown in c of FIG. 8D, and a corresponding exposure value is 1. A female character in the preview interface shown in c of FIG. 8D is clearer than that in the preview interface shown in b of FIG. 8D.

It can be seen that, exposure values and exposure parameters that correspond to brightness of the preview interface shown in a of FIG. 8D, brightness of the preview interface shown in b of FIG. 8D, and brightness of the preview interface shown in c of FIG. 8D are the same. After the terminal device locks the exposure, the exposure parameter is fixed and does not change with movement of the focus. In addition, the exposure parameter is the same, so that corresponding interface brightness may be more stable, thereby reducing flickering.

It may be understood that, by using an example in which the terminal device sets the male character as the tracking target when the exposure is unlocked, if the male character moves to a well-lit position, the terminal device adaptively reduces the exposure value, and an overall picture becomes darker; and if the male character moves to a poor-lit position, the terminal device adaptively increases the exposure value, and the overall picture becomes brighter.

By using an example in which the terminal device sets the male character as the tracking target when the exposure is locked, if the male character moves to a well-lit position, the exposure value of the terminal device does not change, and an overall picture becomes brighter; and if the male character moves to a poor-lit position, the exposure value of the terminal device does not change, and the overall picture becomes darker.

In a possible implementation, in the protagonist mode provided in this embodiment of this application, when a capturing picture of the terminal device includes a character, the terminal device may determine a focus based on the character, and the focus changes with a position of the character in the capturing picture. When a capturing picture of the terminal device does not include a character, the terminal device may automatically select a focused target.

It may be understood that, in the preview scenario, when the user triggers any tracking box through an operation such as clicking or touching in a preview interface displayed with tracking boxes, the terminal device receives an operation of setting a tracking target, and the terminal device displays a small window and does not display a tracking prompt.

When an interface displayed by the terminal device includes a small window, adjustment of an exposure parameter is similar to the adjustment manner in the preview interface shown in FIG. 8A. Details are not described herein again.

It should be noted that, after the terminal device sets the tracking target, the terminal device adjusts the focus based on the tracking target. When the terminal device does not set the tracking target or the tracking target is lost, the terminal device adjusts the focus based on a preview picture.

The adjustment of the exposure parameter in the preview scenario is described above with reference to FIG. 8A. The terminal device may start to record from a preview interface in which exposure is locked, or may start to record from a preview interface in which exposure is unlocked. The process of adjusting an exposure parameter in the recording scenario is described below with reference to FIG. 9 and FIG. 10.

A process in which the terminal device starts to record in the preview interface in which the exposure is unlocked is described below with reference to FIG. 9.

It may be understood that, the process of adjusting an exposure parameter in the recording scenario is similar to the process of adjusting an exposure parameter in the preview scenario.

For example, when the user triggers the recording control 802 through an operation such as clicking or touching in the preview interface shown in a of FIG. 8A, the terminal device receives an operation of recording a video, and enters a recording interface shown in a of FIG. 9A. The recording interface includes a recording region 901, a pause control 902, an end control 903, and a tracking box. A recording picture is displayed in the recording region 901.

The tracking box is for prompting that someone can be set as a tracking target. For example, when the terminal device receives an operation of clicking a tracking box 904, the terminal device sets a character corresponding to the tracking box 803 as the tracking target, and displays a small window with a tracking picture.

It may be understood that, a position of a tracking box is related to a character in the recording picture, and a quantity of tracking boxes is related to a quantity of characters in the recording picture. When the recording picture does not include a character, the terminal device does not display a tracking box. Details are not described herein again.

In a possible implementation, a tracking prompt 930 is further displayed in the recording interface shown in a of FIG. 9A. The tracking prompt 930 is for prompting a user to set the tracking object. A display position, a display manner, and specific content of the tracking prompt are not limited in this embodiment of this application.

When the terminal device receives the operation of setting the tracking target, the tracking prompt 930 disappears, or the tracking prompt 930 may disappear after being displayed for second preset duration. The second preset duration may be 3s, or may be 5s. A specific value of the second preset duration is not limited in this embodiment of this application.

When the user presses, with a finger or a stylus, any position other than the tracking box in the recording region 901 in the recording interface shown in a of FIG. 9A, the terminal device receives a press operation, and adjusts an exposure value based on the pressed position. In this case, an exposure parameter changes, so that brightness of the recording picture displayed in the recording region 901 may change.

It may be understood that, when a region corresponding to the pressed position is darker, if the terminal device increases the exposure value, the brightness of the recording picture is increased. When the region corresponding to the pressed position is brighter, if the terminal device reduces the exposure value, the brightness of the recording picture is reduced.

In this way, the terminal device can independently adjust a position of an exposure point, and adjust the exposure parameter, to adaptively adjust the brightness of the recording picture.

When duration of the press operation reaches a threshold, the terminal device receives an exposure locking operation, the terminal device locks the exposure parameter, the exposure value is fixed, and the terminal device enters a recording interface shown in b of FIG. 9A. The recording interface includes a recording region 905, a pause control, an end control, an exposure locking prompt 906, and a standard bar 907. A recording picture is displayed in the recording region 905. An exposure parameter corresponding to the recording picture is related to brightness of a picture corresponding to a pressed position.

The exposure locking prompt 906 is for prompting the user that the exposure is locked. Content of the exposure locking prompt 906 may be "Exposure locked". A display position, display content, a specific form, and the like of the exposure locking prompt are not limited in this embodiment of this application.

It may be understood that, the exposure locking prompt disappears after preset duration, or disappears when the exposure is adjusted based on the standard bar.

In this way, the terminal device can lock the exposure, and the exposure parameter is fixed, so that brightness of corresponding content (for example, the tracking target) in the recording picture can be more stable, thereby reducing flickering. In a video stored after ending recording, brightness of corresponding content (for example, the tracking target) in the video during exposure locking remains stable.

The standard bar 907 may be a combination of a "sun" icon and a dotted line. In a possible implementation, the "sun" icon is at a middle position of the dotted line. The standard bar 907 may alternatively be in another form, for example, a combination of a "sun" and a solid line. This is not limited in this embodiment of this application.

It should be noted that, the standard bar is for adjusting the exposure value. When the terminal device receives a sliding operation in the interface displayed with the standard bar, the terminal device adjusts, based on the sliding operation, a position of the "sun" in the standard bar, and adjusts the EV value, so that the exposure parameter corresponding to the recording picture changes.

In this embodiment of this application, both the position of the "sun" icon and an EV change value are related to displacement of the sliding operation in a dashed line direction.

For example, when the terminal device receives an upward sliding operation of the user's finger in the recording interface shown in b of FIG. 9A, the "sun" icon in the standard bar moves upward, and the EV value is increased, so that the exposure parameter of the recording picture changes, and the brightness may be increased. When the terminal device receives a downward sliding operation of the user's finger in the recording interface shown in b of FIG. 9A, the "sun" icon in the standard bar moves downward, and the EV value is reduced, so that the exposure parameter of the recording picture changes, and the brightness may be reduced. When the terminal device receives a leftward sliding operation or a rightward sliding operation of the user's finger in the recording interface shown in b of FIG. 9A, the position of the "sun" icon in the standard bar does not change and does not move, and the terminal device does not adjust the EV.

An interface during a sliding operation and an interface when ending the sliding operation are respectively described below with reference to c of FIG. 9A and d of FIG. 9A. An example in which the sliding operation is an upward sliding operation is used.

For example, when the terminal device receives an upward sliding operation in the recording region of the recording interface shown in b of FIG. 9A, the terminal device enters a recording interface shown in c of FIG. 9A. The recording interface includes a recording region 908 and a standard bar 909. Compared with that in the standard bar 907 in the interface shown in b of FIG. 9A, a sun icon in the standard bar 909 moves upward.

In a possible implementation, an EV change value 910 is further displayed in the interface shown in c of FIG. 9A. The EV change value 910 may be +0.9. It may be understood that, during the sliding operation, the EV change value displayed by the terminal device is related to displacement currently corresponding to the sliding operation. In some embodiments, when the terminal device receives the upward sliding operation, the terminal device does not display a tracking box.

In a possible implementation, during the sliding operation, the terminal device may alternatively set to hide some or all controls (for example, a pause control, and an end control) in a displayed interface, to avoid a false trigger (as shown in c of FIG. 9A).

When ending the sliding operation, the terminal device enters a recording interface shown in d of FIG. 9A. The recording interface includes a recording region 911, a pause control, an end control, a standard bar 912, and an exposure locking prompt.

Based on the foregoing embodiment, when the terminal device does not receive a user operation within preset duration, an exposure locking prompt disappears, and a standard bar becomes translucent.

In this embodiment of this application, the user operation includes, but not limited to: an operation of resetting an exposure point, and an operation of adjusting an exposure value, for example, clicking a position other than a tracking box in a recording region, and a sliding operation.

In a possible implementation, the exposure locking prompt disappears after preset duration.

Based on the foregoing embodiment, when the terminal device does not receive a sliding operation within preset duration, a standard bar becomes translucent. For example, for example, when the terminal device does not receive a user operation in the interface shown in d of FIG. 9A, the terminal device enters an interface shown in e of FIG. 9A. The interface includes a recording region 913 and a standard bar 914. The standard bar 914 is translucent.

It may be understood that, in a recording process of the terminal device, the terminal device may also set a tracking target. Alternatively, it may be understood that, the adjustment of the exposure and the setting of the tracking target have no influence on each other. Specifically, the adjustment of the exposure does not affect a change of the focus caused by resetting the tracking target when the focus follows the tracking target, and does not affect an exposure parameter corresponding to a picture after the exposure is locked.

For example, when the user triggers the tracking box 904 through an operation such as clicking in the recording interface shown in a of FIG. 9A, when the terminal device receives an operation of setting the character corresponding to the tracking box 904 as the tracking target, the terminal device enters a recording interface shown in a of FIG. 9B. The recording interface includes a recording region 918 and a small window 919. A tracking picture of the tracking target is displayed in the small window 919.

If a capturing angle of the terminal device does not change and characters and the like do not move, an exposure parameter corresponding to the recording interface shown in a of FIG. 9B and an exposure parameter corresponding to the recording interface shown in a of FIG. 9A are the same.

For example, when the user triggers a tracking box 915 through an operation such as clicking in the recording interface shown in b of FIG. 9A, when the terminal device receives an operation of setting a character corresponding to the tracking box 915 as the tracking target, the terminal device enters a recording interface shown in b of FIG. 9B. The recording interface includes a recording region 920, a small window 921, an exposure locking prompt 922, and a standard bar 923. A tracking picture of the tracking target is displayed in the small window 921. An exposure parameter corresponding to the recording interface shown in b of FIG. 9B and an exposure parameter corresponding to the recording interface shown in b of FIG. 9A are the same. After exposure is locked, a change of a focus does not affect an exposure parameter, so that picture brightness is more stable, and can remain unchanged.

For example, when the user triggers a tracking box 916 through an operation such as clicking in the recording interface shown in d of FIG. 9A, when the terminal device receives an operation of setting a character corresponding to the tracking box 916 as the tracking target, the terminal device enters a recording interface shown in c of FIG. 9B. The recording interface includes a recording region 924, a small window 925, and a standard bar 926. A tracking picture of the tracking target is displayed in the small window 925. An exposure parameter corresponding to the recording interface shown in c of FIG. 9B and an exposure parameter corresponding to the recording interface shown in d of FIG. 9A are the same. After exposure is locked, a change of a focus does not affect an exposure parameter, so that picture brightness is more stable, and can remain unchanged.

A position of a "sun" icon in the standard bar 926 and the position of the "sun" icon in the standard bar 912 are the same.

For example, when the user triggers a tracking box 917 through an operation such as clicking in the recording interface shown in e of FIG. 9A, when the terminal device receives an operation of setting a character corresponding to the tracking box 917 as the tracking target, the terminal device enters a recording interface shown in d of FIG. 9B. The recording interface includes a recording region 927, a small window 928, and a standard bar 929. A tracking picture of the tracking target is displayed in the small window 928. The standard bar 929 is translucent. An exposure parameter corresponding to the recording interface shown in d of FIG. 9B and an exposure parameter corresponding to the recording interface shown in e of FIG. 9A are the same. After exposure is locked, a change of a focus does not affect an exposure parameter, so that picture brightness is more stable, and can remain unchanged.

It may be understood that, in the recording scenario, the terminal device may set the tracking target at any time in a process of adjusting the exposure parameter; and may further adjust the exposure parameter after setting the tracking target. Details are not described herein again. When adjusting the exposure parameter, the terminal device does not stop recording a video and/or a focusing video.

For example, brightness corresponding to a recording picture before or after exposure is locked is described below with reference to FIG. 9C and FIG. 9D.

If the terminal device does not lock the exposure, the terminal device actively measures the exposure based on the focus, and an exposure value is not fixed. In this way, the exposure parameter is not fixed. When the terminal device performs capturing at a second moment, the terminal device may enter a recording interface shown in a of FIG. 9C. The recording interface includes a male character and a female character, and a corresponding exposure value is 1. The male character is set as a tracking target. The terminal device sets the focus in a region corresponding to the male character, and adjusts the exposure value based on the region corresponding to the male character.

When the terminal device receives that the user clicks a tracking box corresponding to the female character, the terminal device sets the focus in a region corresponding to the female character, and adjusts the exposure value based on the region corresponding to the female character. The terminal device may enter a recording interface shown in b of FIG. 9C, and a corresponding exposure value is 0.5. A female character in the preview interface shown in b of FIG. 9C is clearer than that in the recording interface shown in b of FIG. 9C.

It can be seen that, brightness of the recording interface shown in b of FIG. 9C is darker than that in the recording interface shown in a of FIG. 9C. When the terminal device does not lock the exposure, the exposure changes with movement of the focus. In this way, the exposure value changes, and the exposure parameter changes. In addition, it is possible that picture brightness is unstable, causing flickering.

If the terminal device locks the exposure, when the terminal device performs capturing at a second moment, the terminal device may enter a recording interface shown in a of FIG. 9D. The recording interface includes a male character and a female character, and a corresponding exposure value is 1. The male character is set as a tracking target. The terminal device sets the focus in a region corresponding to the male character.

When the terminal device receives that the user clicks a tracking box corresponding to the female character, the terminal device sets the focus in a region corresponding to the female character. The terminal device may enter a preview interface shown in b of FIG. 9D, and a corresponding exposure value is 1. A female character in the preview interface shown in b of FIG. 9D is clearer than that in the preview interface shown in a of FIG. 9D.

It can be seen that, an exposure value corresponding to the recording interface shown in a of FIG. 9D and an exposure value corresponding to the recording interface shown in b of FIG. 9D are the same. After the terminal device locks the exposure, the exposure parameter is fixed and does not change with movement of the focus. In addition, the exposure parameter is the same, so that corresponding interface brightness may be more stable, thereby reducing flickering.

It may be understood that, when ending recording, the terminal device generates and stores a video based on a recording picture, and generates and stores a focusing video based on a tracking picture.

It may be understood that, if the terminal device does not lock the exposure during recording, if an exposure parameter in a recording interface is not fixed and changes with the focus, and brightness of a recording picture may be unstable, picture brightness in the generated video is also unstable. If the terminal device does not lock the exposure during recording, if an exposure parameter in a recording interface is not fixed and changes with the focus, and brightness of a tracking picture is unstable, picture brightness of a part of video corresponding to the tracking picture during exposure locking in the generated focusing video is unstable.

If the terminal device locks the exposure during recording; and during exposure locking, an exposure parameter is fixed and does not change with the focus, and brightness of a recording picture in a recording interface is stable, picture brightness of a part of video corresponding to the recording picture during exposure locking in the generated video is also stable.

If the terminal device locks the exposure during recording; and during exposure locking, an exposure parameter is fixed and does not change with the focus, and brightness of a tracking picture in a recording interface is stable, picture brightness of a part of video corresponding to the tracking picture during exposure locking in the generated focusing video is stable.

A process in which the terminal device starts to record in the preview interface in which the exposure is locked is described below with reference to FIG. 10.

For example, when the user triggers a recording control through an operation such as clicking or touching in the preview interface shown in e of FIG. 8A, the terminal device receives an operation of recording a video, and enters a recording interface shown in a of FIG. 10. The recording interface includes a recording region 1001, a pause control 1002, an end control 1003, and a standard bar 1004.

A recording picture and recording duration are displayed in the recording region 1001. When the recording picture includes a character, a tracking box 1005 is further displayed in the recording region 1001. Optionally, when the terminal device does not set a tracking target, a tracking prompt 1006 is further displayed in the recording region.

The standard bar 1004 is translucent, and is consistent with the standard bar 814 in the preview interface shown in e of FIG. 8A.

When the user triggers, through a long-press operation, any position other than the tracking box in the recording region 1001 of the recording interface shown in a of FIG. 10, the terminal device receives an operation of relocking exposure, and adjusts an exposure value and locks the exposure based on the position of the long-press operation. The terminal device enters a recording interface shown in b of FIG. 10. The recording interface includes a recording region 1007, a pause control, a standard bar 1008, and an exposure locking prompt 1009. A recording picture and recording duration are displayed in the recording region 1005. Compared with the recording interface shown in a of FIG. 10, brightness of the recording interface shown in b of FIG. 10 changes.

Based on the foregoing embodiment, when the terminal device does not receive a sliding operation within preset duration, a standard bar becomes translucent. For example, for example, when the terminal device does not receive a user operation in the interface shown in b of FIG. 10, the terminal device enters an interface shown in c of FIG. 10. The interface includes a recording region 1010, a pause control, an end control, and a standard bar 1011. The standard bar 1011 is translucent. A position of the standard bar 1011 is consistent with a position of the standard bar 1008. Brightness of a recording picture displayed in the recording region 1010 is consistent with brightness of a recording picture displayed in the recording region 1007.

It should be noted that, in the recording scenario, the terminal device cannot release exposure locking.

It may be understood that, in the recording scenario, when the user triggers any tracking box through an operation such as clicking or touching in a recording interface displayed with tracking boxes, the terminal device receives an operation of setting a tracking target, and the terminal device displays a small window and does not display a tracking prompt.

It may be understood that, when an interface displayed by the terminal device includes a small window, adjustment of an exposure parameter is similar to the adjustment manner shown in FIG. 9A to FIG. 10. Details are not described herein again.

It may be understood that, the foregoing prompts such as a tracking prompt and an exposure locking prompt may be displayed at the top of a preview region or the top of a recording region, or may be displayed at other positions. A position and content of the tracking prompt and a position and content of the exposure locking prompt are not limited in this embodiment of this application.

It should be noted that, the separate control solution for a focus and exposure and the adjustment manner provided in embodiments of this application may alternatively be applied to another video recording mode. When the exposure is locked, the terminal device may automatically adjust a position of the focus based on a capturing picture, or may adjust the position of the focus based on a tracking target, or may determine the position of the focus in another manner, which is not limited herein.

It may be understood that, the interface of the terminal device is only an example, and the interface of the terminal device may also include more or less content. In addition, a shape and a form of each control in the foregoing embodiments are only examples. Content of a display interface and the shape and the form of each control each are not limited in this embodiment of this application.

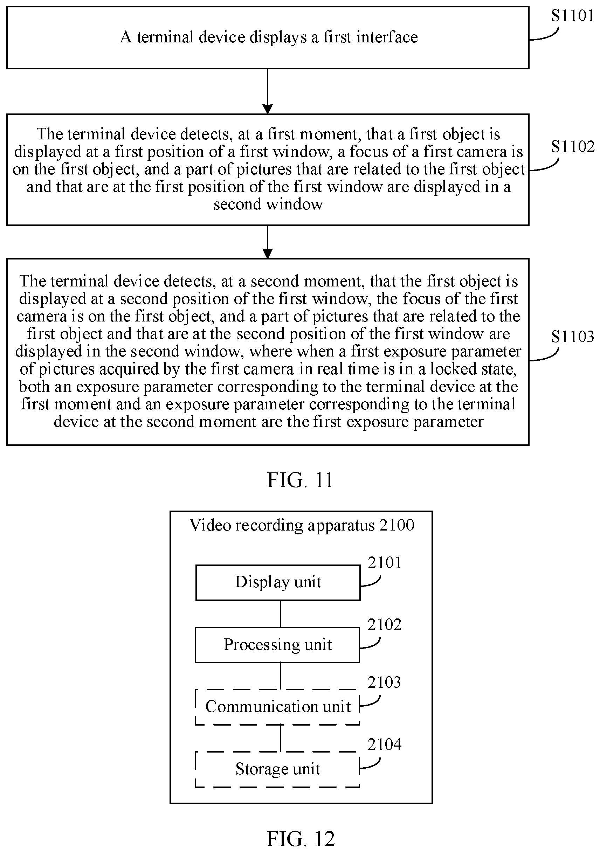

Based on the foregoing embodiments, an embodiment of this application provides a video recording method. For example, FIG. 11 is a schematic flowchart of a video recording method according to an embodiment of this application. As shown in FIG. 11, the video recording method may include the following steps.

S1101: A terminal device displays a first interface.

In this embodiment of this application, the first interface includes a first window and a second window, pictures acquired by a first camera in real time are displayed in the first window, the pictures include a first object, a focus of the first camera is on the first object, and a part of pictures related to the first object in the first window are displayed in the second window.

It may be understood that, the first interface may be a preview interface (for example, an interface shown in a of FIG. 3B) in which a tracking target is set, or may be a recording interface (for example, an interface shown in a of FIG. 3C) in which a tracking target is set. The first window may be understood as a preview region or a recording region as described above. A picture acquired by the first camera in real time may be understood as a preview picture or a recording picture as described above. The second window may be understood as a small window as described above. A picture displayed in the second window may be understood as a tracking picture, and corresponds to the tracking target.

S1102: The terminal device detects, at a first moment, that the first object is displayed at a first position of the first window, the focus of the first camera is on the first object, and a part of pictures that are related to the first object and that are at the first position of the first window are displayed in the second window.

S1103: The terminal device detects, at a second moment, that the first object is displayed at a second position of the first window, the focus of the first camera is on the first object, and a part of pictures that are related to the first object and that are at the second position of the first window are displayed in the second window, where when a first exposure parameter of the pictures acquired by the first camera in real time is in a locked state, both an exposure parameter corresponding to the terminal device at the first moment and an exposure parameter corresponding to the terminal device at the second moment are the first exposure parameter.

In this embodiment of this application, a focus changes with a position of a focusing target. Specifically, for how the focus changes with the position of the focusing target, refer to FIG. 3B or FIG. 3C. For example, an interface at the first moment may be an interface shown in a of FIG. 3B, and an interface at the second moment may be an interface shown in b of FIG. 3B; or the interface at the first moment may be an interface shown in a of FIG. 3C, and the interface at the second moment may be an interface shown in b of FIG. 3C.

In a protagonist mode, the focus and the exposure can be separately controlled, so that overexposure or underexposure caused when the focus is at a strong light source position or a darker position can be reduced, thereby improving user experience.

In conclusion, a terminal device may additionally obtain and display pictures corresponding to a tracking target, to additionally obtain one or more focusing videos corresponding to the tracking target while recording a video. In this way, a subsequent editing operation for the tracking target is reduced, thereby improving editing efficiency. When displaying a picture based on the tracking target, the terminal device can also control the exposure to be locked to fix an exposure parameter.

When the first exposure parameter of the pictures acquired by the first camera in real time is in an unlocked state, the exposure parameter corresponding to the terminal device at the first moment and the exposure parameter corresponding to the terminal device at the second moment are different.

In the protagonist mode, the terminal device may not lock the exposure, and an exposure value changes with the focus.

In this way, when the terminal device displays a picture based on the tracking target, the terminal device can also control the exposure value based on the focus, to adapt to changes in light, thereby controlling the exposure from another dimension, and improving user experience.

Optionally, the pictures in the first window further include a second object, and the method further includes: detecting, by the terminal device at a third moment, a first operation of a user for the second object, where in response to the first operation, the focus of the first camera is on the second object, and a part of pictures related to the second object in the first window are displayed in the second window; and an exposure parameter corresponding to the terminal device at the third moment is the first exposure parameter.

It may be understood that, when the exposure is locked, the terminal device switches an object corresponding to the tracking target, and an exposure parameter does not change. For example, refer to corresponding descriptions in FIG. 8D and FIG. 9D as described above.

Optionally, the pictures in the first window further include a second object, the first exposure parameter of the pictures acquired by the first camera in real time is in the unlocked state, and the method further includes: detecting, by the terminal device at a third moment, a first operation of a user for the second object, where in response to the first operation, the focus of the first camera is on the second object, and a part of pictures related to the second object in the first window are displayed in the second window; and an exposure parameter corresponding to the terminal device at the third moment and the exposure parameter corresponding to the terminal device at the second moment are different.

It may be understood that, when the exposure is locked, the terminal device switches an object corresponding to the tracking target, and an exposure parameter changes. For example, refer to corresponding descriptions in FIG. 8C and FIG. 9C as described above.

Optionally, the first object is displayed in the center of the second picture.

For example, in interfaces shown in FIG. 3B and FIG. 3C, the tracking target is displayed in the middle of tracking pictures displayed in the small window.

Optionally, the second window floats above the first window, and the second window is smaller than the first window. For example, in the interfaces shown in FIG. 3B and FIG. 3C, the small window is smaller than the preview region or the recording region, and floats above the preview region or the recording region.

Optionally, before or after the displaying, by the terminal device, a first interface, the method further includes: receiving, by the terminal device, a second operation for the first window; and locking, by the terminal device in response to the second operation, an exposure parameter of the first camera as the first exposure parameter.

In this embodiment of this application, the second operation may be understood as a long-press operation, or a press operation exceeding preset time. The second operation may alternatively be another operation, which is not limited herein.

It may be understood that, the terminal device may lock the exposure before setting the tracking target, or may lock the exposure after setting the tracking target. The setting of the tracking target and whether the exposure parameter is locked have no influence on each other. For example, the terminal device may enter an interface shown in b of FIG. 8B from an interface shown in b of FIG. 8A; or may enter the interface shown in b of FIG. 8B from an interface shown in a of FIG. 8B.

In this way, the terminal device can separately control the focus and the exposure, so that overexposure or underexposure caused when the focus is at a strong light source position or a darker position can be reduced. The setting of the tracking target and whether the exposure parameter is locked have no influence on each other, which can facilitate the user to lock the exposure or set the tracking target, thereby improving user experience.

Optionally, before the displaying, by the terminal device, a first interface, the method further includes: displaying, by the terminal device, a second interface, where the second interface includes the first window; and displaying, by the terminal device when detecting that the pictures displayed in the first window include the first object, a first tracking identity associated with the first object in the first window; and the displaying, by the terminal device, a first interface of a camera application includes: displaying, by the terminal device, the first interface in response to a trigger operation of the user for the first tracking identity.

It may be understood that, before the tracking target is set, the terminal device does not display the small window. After the tracking target is set, the terminal device displays the small window. The tracking identity may be a tracking box as described above, or may be in another form (for example, a thumbnail of an object, a number, or an icon), which is not limited herein. The tracking identity may alternatively be at a position at which an object is displayed, or may be arranged and displayed on an edge of the preview region or the recording region, which is not limited herein.

The first tracking identity may be a tracking identity corresponding to any object, for example, a tracking box corresponding to a male character.

The trigger operation for the first tracking identity may be a click operation, or may be a touch operation. A type of the trigger operation is not limited in this embodiment of this application.

For example, when detecting an operation in which the user clicks a tracking box 605 corresponding to a male character in an interface shown in b of FIG. 6, the terminal device may enter an interface shown in c of FIG. 6. Alternatively, when detecting that the user clicks a tracking box 701 corresponding to a male character in an interface shown in a of FIG. 7, the terminal device may enter an interface shown in b of FIG. 7.

Optionally, the first interface is a preview interface in a video recording process, the first interface further includes an end control, and the method further includes: detecting, by the terminal device, a third operation for the end control; and storing, by the terminal device, a first video and a second video in response to the third operation, where the first video is a video formed by the pictures displayed in the first window, and the second video is a video formed by the pictures displayed in the second window.

In this embodiment of this application, the third operation may be a user click operation, or may be a user touch operation. The third operation is not limited in this embodiment of this application. The first video may be a video generated based on recording pictures displayed in the recording region, and the second video may be a video generated based on tracking pictures displayed in the small window.

The end control may be an end control 318 shown in a of FIG. 3C. When the terminal device detects an operation in which the user clicks the end control 318, the terminal device ends recording, generates a video based on recording pictures displayed in a recording region, and generates a focusing video based on tracking pictures displayed in a small window.

In this way, the terminal device may store two videos, and additionally generate a video based on the tracking target, without the need for video editing by the user, so that the video of the tracking target can be obtained, thereby improving user experience.

Optionally, the first interface is a preview interface before starting to record a video.

Optionally, further displaying, by the terminal device, a first identity in the first window in response to the first operation; receiving, by the terminal device, a fourth operation for the first identity; and adjusting, by the terminal device in response to the fourth operation, the first exposure parameter to a second exposure parameter, where the second exposure parameter is in the locked state.

The first identity may be a standard bar as described above, for example, a standard bar 807 shown in b of FIG. 8A, or a standard bar 907 shown in b of 9A. The fourth operation may be a sliding operation, or may be an operation in another form. This is not limited in this embodiment of this application.

When the terminal device detects the sliding operation, the terminal device may adjust the exposure value based on the sliding operation, to adjust the exposure parameter.

For example, the terminal device may receive a sliding operation in the interface shown in b of FIG. 8A, and adjust an exposure value and an exposure parameter based on the sliding operation, to enter an interface shown in d of FIG. 8A. The terminal device may receive a sliding operation in an interface shown in b of FIG. 9A, and adjust an exposure value and an exposure parameter based on the sliding operation, to enter an interface shown in d of FIG. 9A.

Optionally, the first window further includes one or more controls, and the fourth operation is a sliding operation; and during the sliding operation, the one or more controls are not displayed in the first window.

The preview region may include a protagonist mode exit control, a setting control, a flash control, a small window pattern control, a zoom control, and the like. The recording region may include a flash control. It may be understood that, a recording control may alternatively be in the preview region; and a pause control, an end control, and the like may alternatively be in the recording region, which are not limited herein.

For example, the terminal device may receive a sliding operation in the interface shown in b of FIG. 8A, and adjust an exposure value and an exposure parameter based on the sliding operation, to enter an interface shown in d of FIG. 8A through an interface shown in c of FIG. 8A . The terminal device may receive a sliding operation in an interface shown in b of FIG. 9A, and adjust an exposure value and an exposure parameter based on the sliding operation, to enter an interface shown in d of FIG. 9A through an interface shown in c of FIG. 9A.

In this way, the terminal device can hide one or more controls, so that false triggers by the user can be reduced, thereby improving user experience.

Optionally, during the sliding operation, an exposure change value is further displayed in the first window, and the exposure change value is related to a sliding distance corresponding to the sliding operation.

For example, an exposure change value 810 is further displayed in the interface shown in c of FIG. 8A . An exposure change value 910 is further displayed in the interface shown in c of FIG. 9A.

In this way, an exposure change value can prompt the user of an adjustment degree of an exposure value, thereby improving user experience.

Optionally, when the terminal device does not receive the fourth operation within a preset time period after a fourth moment, the first identity becomes translucent, and the fourth moment is a moment at which the first identity is triggered by the terminal device.

The fourth operation is any operation of adjusting the exposure, or may be understood as an operation for the first identity, for example, a sliding operation, or a long-press operation. The fourth operation is not limited in this embodiment of this application.

The preset time period may be two seconds, or may be five seconds. A specific value of the preset time period is not limited herein.

For example, when a sliding operation is not received in the interface shown in d of FIG. 8A , the terminal device may enter an interface shown in e of FIG. 8A , and a standard bar becomes translucent. When a sliding operation is not received in the interface shown in d of FIG. 9A, the terminal device may enter an interface shown in e of FIG. 9A, and a standard bar becomes translucent.

It may be understood that, when the operation of adjusting the exposure is not received with the preset time period, display of the first identity may be hidden or weaken, to reduce interference with the preview picture or the recording picture, thereby improving user experience.

It may be understood that, further displaying, by the terminal device, an exposure locking prompt in the first window in response to the first operation, where the exposure locking prompt is for prompting the user that exposure is locked.

For the exposure locking prompt, refer to exposure locking prompts in FIG. 8A to FIG. 9D as described above, for example, an exposure locking prompt 806 in FIG. 8A , and an exposure locking prompt 906 in FIG. 9A. Details are not described herein again.

The terminal device can display the exposure locking prompt, to prompt the user that the exposure parameter is locked, so that the user can subsequently adjust the exposure value, cancel locking of the exposure, or the like, thereby improving user experience.

Optionally, the method further includes: receiving, by the terminal device, a fifth operation for the first window; and canceling, by the terminal device in response to the fifth operation, locking of an exposure parameter, and skipping displaying the exposure locking prompt in the first window.

The fifth operation may be a user click operation, or may be another operation, which is not limited herein.

For example, when a user click operation is received in the interface shown in e of FIG. 8A , the terminal device may enter an interface shown in a of FIG. 8A .

In this way, the terminal device can also cancel locking of the exposure, and adjust the exposure parameter based on the focus, an entire picture, and the like. In addition, a plurality of control manners and functions improve user experience.

Optionally, receiving, by the terminal device, a sixth operation for the first window; and adjusting, by the terminal device in response to the sixth operation, an exposure parameter in the locked state to a third exposure parameter based on the sixth operation.

The sixth operation may be a user long-press operation, a click operation, or the like, or may be another operation, which is not limited herein.

For example, when a user long-press operation is received in an interface shown in a of FIG. 10, the terminal device may enter an interface shown in b of FIG. 10.

In this way, the terminal device can also adjust a position at which the exposure is locked, and adjust and fix the exposure parameter based on the new position and the like. In addition, a plurality of control manners and functions improve user experience.

The video recording method provided in this embodiment of this application is described above, and an apparatus for performing the above method provided in an embodiment of this application is described below. FIG. 12 is a schematic diagram of a structure of a video recording apparatus according to an embodiment of this application. The video recording apparatus may be a terminal device in this embodiment of this application, or may be a chip or a chip system in the terminal device.

As shown in FIG. 12, a video recording apparatus 2100 may be used in a communication device, a circuit, a hardware component, or a chip, and the video recording apparatus includes: a display unit 2101 and a processing unit 2102. The display unit 2101 is configured to support the display steps performed by the video recording apparatus 2100. The processing unit 2102 is configured to support the information processing steps performed by the video recording apparatus 2100.

In a possible implementation, the video recording apparatus 2100 may further include: a communication unit 2103. Specifically, the communication unit is configured to support the data sending step and the data receiving step performed by the video recording apparatus 2100. The communication unit 2103 may be an input or output interface, a pin, a circuit, or the like.

In a possible embodiment, the video recording apparatus may further include: a storage unit 2104. The processing unit 2102 is connected to the storage unit 2104 through a bus. The storage unit 2104 may include one or more memories, and the memory may be one or more devices or components in a circuit that are used to store a program or data. The storage unit 2104 may exist independently, and is connected to the processing unit 2102 included by the video recording apparatus by using a communication line. The storage unit 2104 may alternatively be integrated with the processing unit 2102.

The storage unit 2104 may store computer executable instructions of the method of the terminal device, so that the processing unit 2102 performs the method in the foregoing embodiments. The storage unit 2104 may be a register, a cache, a RAM, or the like, and the storage unit 2104 may be integrated with the processing unit 2102. The storage unit 2104 may be a read-only memory (read-only memory, ROM) or another type of static storage device that may store static information and instructions, and the storage unit 2104 may be independent of the processing unit 2102.

An embodiment of this application provides a terminal device. The terminal device may also be referred to as a terminal (terminal), a user equipment (user equipment, UE), a mobile station (mobile station, MS), a mobile terminal (mobile terminal, MT), or the like. The terminal device may be a mobile phone (mobile phone), an intelligent television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical care (remote medical), a wireless terminal in a smart grid (smart grid), a wireless terminal in transportation safety (transportation safety), a wireless terminal in a smart city (smart city), a wireless terminal in a smart home (smart home), or the like.

The terminal device includes includes: a processor and a memory, where the memory stores computer executable instructions; and the processor reads the computer executable instructions stored in the memory, to enable the terminal device to perform the foregoing method.

An embodiment of this application provides a terminal device. For a structure thereof, refer to FIG. 1. A memory of the terminal device may be configured to store at least one program instruction, and a processor is configured to invoke the at least one program instruction, to implement the technical solutions of the foregoing method embodiments. An implementation principle and a technical effect thereof are similar to those of the foregoing related method embodiments. Details are not described herein again.

An embodiment of this application provides a chip. The chip includes a processor, and the processor is configured to invoke a computer program stored in a memory, to perform the technical solutions of the foregoing method embodiments. An implementation principle and a technical effect thereof are similar to those of the foregoing related embodiments. Details are not described herein again.

An embodiment of this application provides a computer program product. The computer program product, when run on an electronic device, enables the terminal device to perform the technical solutions of the foregoing method embodiments. An implementation principle and a technical effect thereof are similar to those of the foregoing related embodiments. Details are not described herein again.

An embodiment of this application provides a computer-readable storage medium, storing program instructions. The program instructions, when executed by a terminal device, enables the terminal device to perform the technical solutions of the foregoing method embodiments. An implementation principle and a technical effect thereof are similar to those of the foregoing related embodiments. Details are not described herein again. All or some of methods in the foregoing embodiments may be implemented by using software, hardware, firmware, or any combination thereof. If implemented in software, the functions may be stored on or transmitted over as one or more instructions or code on a computer-readable medium. The computer readable medium may include a computer storage medium and a communication medium, and may further include any medium that can transmit a computer program from one place to another. The storage medium may be any target medium accessible by a computer.

The computer-readable medium may include a RAM, a ROM, an EEPROM, a compact disc read-only memory (compact disc read-only memory, CD-ROM), or another optical disc storage or disk storage medium, or another magnetic storage device, or any other medium that can carry or store required program code in a form of an instruction or a data structure and can be accessed by a computer. Any connection line may also be appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. The foregoing combination should also be included in the scope of the computer readable medium.

Embodiments of this application are described with reference to the flowcharts and/or block diagrams of a method, a device (system), and computer program products of embodiments of this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processing unit of another programmable device to generate a machine, so that the instructions executed by the computer or the processing unit of the another programmable device generate an apparatus for implementing a specified function in one or more procedures in the flowcharts and/or in one or more blocks in the block diagrams.

The objectives, technical solutions, and benefits of this application are further described in detail in the foregoing specific embodiments. It should be understood that the foregoing descriptions are merely specific embodiments of this application, but are not intended to limit the protection scope of this application, which is rather defined by the appended set of claims.

## Claims

1. A video recording method, applied to a terminal device (100) comprising a camera (150), the method comprising:
driving, by the terminal device, the camera to acquire pictures in real time, wherein the pictures comprise a first object, wherein a focus of the camera is on the first object, and the focus changes based on a position of the first object;
displaying (S1101), by the terminal device, a first interface, wherein the first interface comprises a first window and a second window, the pictures acquired by the camera in real time are displayed in the first window, and the pictures acquired by the camera are automatically cropped based on the first object, and the cropped pictures are displayed in the second window, wherein the first object is displayed in the center of the second window, wherein the second window floats above the first window, and the second window is smaller than the first window;
detecting (S1102), by the terminal device at a first moment, that the first object is displayed at a first position of the first window, and displaying, in the second window, the cropped pictures that comprise the first object at the first position of the first window;
detecting (S1103), by the terminal device at a second moment, that the first object is displayed at a second position of the first window, and displaying, in the second window, the cropped pictures that comprise the first object at the second position of the first window;
recording and storing, by the terminal device, the pictures displayed in the first window as a first video and recording and storing, by the terminal device, the cropped pictures as a second video; and
displaying, by the terminal device, a first thumbnail of the first video and a second thumbnail of a second video within a gallery interface, wherein the displaying step comprises setting, by the terminal device, a size of the second thumbnail such that a size difference exists between the first thumbnail and the second thumbnail, wherein
when a first exposure parameter of the pictures acquired by the camera in real time is in a locked state, the terminal device controls, in response to receiving an exposure locking operation, an exposure of the camera to be locked such that both the exposure parameter at the first moment and the exposure parameter at the second moment are the first exposure parameter, the exposure locking operation being received when a duration of a press operation performed by a user on the terminal device reaches a threshold duration;
wherein when the first exposure parameter of the pictures acquired by the camera in real time is in an unlocked state, the terminal device controls the exposure of the camera based on the focus of the camera such that the exposure parameter at the first moment and the exposure parameter at the second moment are different,
wherein the exposure parameter is one of: an aperture size, a shutter speed, an ISO sensitivity, and an exposure value, EV.

2. The method according to claim 1, wherein the pictures in the first window further comprise a second object, and the method further comprises:
detecting, by the terminal device at a third moment, a first operation of a user for the second object, wherein
in response to the first operation, the focus of the camera is changed to the second object, and the pictures acquired by the camera are automatically cropped based on the second object, and the cropped pictures are displayed in the second window; and
when the first exposure parameter of the pictures acquired by the camera in real time is in the locked state, the terminal device controls an exposure of the camera to be locked such that an exposure parameter at the third moment is the first exposure parameter.

3. The method according to claim 1, wherein the pictures in the first window further comprise a second object, the first exposure parameter of the pictures acquired by the camera in real time is in the unlocked state, and
the method further comprises:
detecting, by the terminal device at a third moment, a first operation of a user for the second object, wherein
in response to the first operation, the focus of the camera is changed to the second object, and the pictures acquired by the camera are automatically cropped based on the second object, and the cropped pictures are displayed in the second window; and
the terminal device controls the exposure of the camera based on the focus of the camera such that an exposure parameter at the third moment and the exposure parameter at the second moment are different.

4. The method according to any one of claims 1 to 3, wherein before or after the displaying, by the terminal device, a first interface, the method further comprises:
receiving, by the terminal device, a second operation for the first window; and
locking, by the terminal device in response to the second operation, an exposure parameter of the camera as the first exposure parameter.

5. The method according to any one of claims 1 to 4, wherein before the displaying, by the terminal device, a first interface, the method further comprises:
displaying, by the terminal device, a second interface, wherein the second interface comprises the first window; and
displaying, by the terminal device when detecting that the pictures displayed in the first window comprise the first object, a first tracking identity associated with the first object in the first window; and
the displaying, by the terminal device, a first interface of a camera application comprises:
displaying, by the terminal device, the first interface in response to a trigger operation of the user for the first tracking identity.

6. The method according to any one of claims 1 to 5, wherein the first interface is a preview interface in a video recording process, the first interface further comprises an end control, and the method further comprises:
detecting, by the terminal device, a third operation for the end control; and
storing, by the terminal device, a first video and a second video in response to the third operation, wherein the first video is a video formed by the pictures displayed in the first window, and the second video is a video formed by the pictures displayed in the second window.

7. The method according to any one of claims 1 to 6, wherein the first interface is a preview interface before starting to record a video.

8. The method according to any one of claims 1 to 7, wherein the method further comprises:
further displaying, by the terminal device, a first identity in the first window in response to the first operation;
receiving, by the terminal device, a fourth operation for the first identity; and
adjusting, by the terminal device in response to the fourth operation, the first exposure parameter to a second exposure parameter, wherein the second exposure parameter is in the locked state.

9. The method according to claim 8, wherein the first window further comprises one or more controls, and the fourth operation is a sliding operation; and
during the sliding operation, the one or more controls are not displayed in the first window;
wherein during the sliding operation, an exposure change value is further displayed in the first window, and the exposure change value is related to a sliding distance corresponding to the sliding operation.

10. The method according to any one of claims 1 to 9, wherein
further displaying, by the terminal device, an exposure locking prompt in the first window in response to the first operation, wherein the exposure locking prompt is for prompting the user that exposure is locked;
wherein the method further comprises:
receiving, by the terminal device, a fifth operation for the first window; and
canceling, by the terminal device in response to the fifth operation, locking of an exposure parameter, and skipping displaying the exposure locking prompt in the first window.

11. The method according to any one of claims 1 to 10, wherein
receiving, by the terminal device, a sixth operation for the first window; and
adjusting, by the terminal device in response to the sixth operation, an exposure parameter in the locked state to a third exposure parameter based on the sixth operation.

12. A terminal device (100), wherein the terminal device comprises a processor (180), a memory (120), a display unit (140), and a camera (150), and the processor is configured to invoke a computer program in the memory, to perform the method according to any one of claims 1 to 11.

13. A computer-readable storage medium, wherein the computer-readable storage medium stores computer instructions, the computer instructions, when run on the terminal device of claim 12, enabling the terminal device to perform the method according to any one of claims 1 to 11.

## Patentansprüche

1. Videoverfahren, das auf ein Endgerät (100) angewendet wird, welches eine Kamera (150) umfasst, wobei das Verfahren umfasst:
Ansteuern der Kamera durch das Endgerät, um Bilder in Echtzeit zu erfassen, wobei die Bilder ein erstes Objekt umfassen, wobei ein Fokus der Kamera auf dem ersten Objekt liegt und sich der Fokus basierend auf einer Position des ersten Objekts ändert;
Anzeigen (S1101) einer ersten Schnittstelle durch das Endgerät, wobei die erste Schnittstelle ein erstes Fenster und ein zweites Fenster umfasst, wobei die von der Kamera in Echtzeit erfassten Bilder im ersten Fenster angezeigt werden und die von der Kamera erfassten Bilder basierend auf dem ersten Objekt automatisch zugeschnitten werden, und wobei die zugeschnittenen Bilder im zweiten Fenster angezeigt werden, wobei das erste Objekt in der Mitte des zweiten Fensters angezeigt wird, wobei das zweite Fenster über dem ersten Fenster schwebt und das zweite Fenster kleiner als das erste Fenster ist;
Erkennen (S1102) durch das Endgerät zu einem ersten Zeitpunkt, dass das erste Objekt an einer ersten Position des ersten Fensters angezeigt wird, und Anzeigen der zugeschnittenen Bilder, die das erste Objekt an der ersten Position des ersten Fensters umfassen, im zweiten Fenster;
Erkennen (S1103) durch das Endgerät zu einem zweiten Zeitpunkt, dass das erste Objekt an einer zweiten Position des ersten Fensters angezeigt wird, und Anzeigen der zugeschnittenen Bilder, die das erste Objekt an der zweiten Position des ersten Fensters umfassen, im zweiten Fenster;
Aufzeichnen und Speichern der im ersten Fenster angezeigten Bilder als ein erstes Video durch das Endgerät, sowie Aufzeichnen und Speichern der zugeschnittenen Bilder als ein zweites Video durch das Endgerät; und
Anzeigen einer ersten Miniaturansicht des ersten Videos und einer zweiten Miniaturansicht eines zweiten Videos durch das Endgerät innerhalb einer Galerie-Schnittstelle, wobei der Anzeigeschritt das Einstellen einer Größe der zweiten Miniaturansicht durch das Endgerät umfasst, sodass ein Größenunterschied zwischen der ersten Miniaturansicht und der zweiten Miniaturansicht besteht, wobei
wenn ein erster Belichtungsparameter der von der Kamera in Echtzeit erfassten Bilder in einem gesperrten Zustand ist, steuert das Endgerät als Reaktion auf den Empfang eines Belichtungssperrvorgangs eine Belichtung der Kamera so, dass sie gesperrt wird, sodass sowohl der Belichtungsparameter zum ersten Zeitpunkt als auch der Belichtungsparameter zum zweiten Zeitpunkt der erste Belichtungsparameter sind, wobei der Belichtungssperrvorgang empfangen wird, wenn eine Dauer eines von einem Benutzer auf dem Endgerät durchgeführten Drückvorgangs eine Schwellenwertdauer erreicht;
wobei, wenn der erste Belichtungsparameter der in Echtzeit durch die Kamera aufgenommenen Bilder in einem entsperrten Zustand ist, das Endgerät die Belichtung der Kamera basierend auf dem Fokus der Kamera so steuert, dass sich der Belichtungsparameter zum ersten Zeitpunkt und der Belichtungsparameter zum zweiten Zeitpunkt voneinander unterscheiden,
wobei der Belichtungsparameter eines der folgenden ist: eine Blendenöffnung, eine Verschlusszeit, eine ISO-Empfindlichkeit und ein Belichtungswert, EV.

2. Verfahren nach Anspruch 1, wobei die Bilder im ersten Fenster ferner ein zweites Objekt umfassen und das Verfahren ferner umfasst:
Erfassen, durch das Endgerät zu einem dritten Zeitpunkt, einer ersten Operation eines Benutzers für das zweite Objekt, wobei
als Reaktion auf die erste Operation der Fokus der Kamera auf das zweite Objekt geändert wird, und die durch die Kamera aufgenommenen Bilder automatisch basierend auf dem zweiten Objekt zugeschnitten werden, und die zugeschnittenen Bilder im zweiten Fenster angezeigt werden; und
wenn der erste Belichtungsparameter der in Echtzeit durch die Kamera aufgenommenen Bilder im gesperrten Zustand ist, das Endgerät eine Belichtung der Kamera so steuert, dass sie gesperrt wird, sodass ein Belichtungsparameter zum dritten Zeitpunkt der erste Belichtungsparameter ist.

3. Verfahren nach Anspruch 1, wobei die Bilder im ersten Fenster ferner ein zweites Objekt umfassen, der erste Belichtungsparameter der in Echtzeit durch die Kamera aufgenommenen Bilder im entsperrten Zustand ist, und
das Verfahren ferner umfasst:
Erfassen, durch das Endgerät zu einem dritten Zeitpunkt, einer ersten Operation eines Benutzers für das zweite Objekt, wobei
als Reaktion auf die erste Operation der Fokus der Kamera auf das zweite Objekt geändert wird, und die durch die Kamera aufgenommenen Bilder automatisch basierend auf dem zweiten Objekt zugeschnitten werden, und die zugeschnittenen Bilder im zweiten Fenster angezeigt werden; und
das Endgerät die Belichtung der Kamera basierend auf dem Fokus der Kamera so steuert, dass sich ein Belichtungsparameter zum dritten Zeitpunkt und der Belichtungsparameter zum zweiten Zeitpunkt voneinander unterscheiden.

4. Verfahren nach einem der Ansprüche 1 bis 3, wobei vor oder nach dem Anzeigen einer ersten Schnittstelle durch das Endgerät das Verfahren ferner umfasst:
Empfangen, durch das Endgerät, einer zweiten Operation für das erste Fenster; und
Sperren, durch das Endgerät als Reaktion auf die zweite Operation, eines Belichtungsparameters der Kamera als den ersten Belichtungsparameter.

5. Verfahren nach einem der Ansprüche 1 bis 4, wobei vor dem Anzeigen einer ersten Schnittstelle durch das Endgerät das Verfahren ferner umfasst:
Anzeigen einer zweiten Schnittstelle durch das Endgerät, wobei die zweite Schnittstelle das erste Fenster umfasst; und
Anzeigen einer ersten Tracking-Identität, die dem ersten Objekt im ersten Fenster zugeordnet ist, durch das Endgerät, wenn erkannt wird, dass die im ersten Fenster angezeigten Bilder das erste Objekt umfassen; und
das Anzeigen einer ersten Schnittstelle einer Kameraanwendung durch das Endgerät umfasst:
Anzeigen der ersten Schnittstelle durch das Endgerät als Reaktion auf eine Auslöseoperation des Benutzers für die erste Tracking-Identität.

6. Verfahren nach einem der Ansprüche 1 bis 5, wobei die erste Schnittstelle eine Vorschauschnittstelle während eines Videoaufnahmevorgangs ist, die erste Schnittstelle ferner ein Beendigungssteuerelement umfasst und das Verfahren ferner umfasst:
Erkennen einer dritten Operation für das Beendigungssteuerelement durch das Endgerät; und
Speichern eines ersten Videos und eines zweiten Videos durch das Endgerät als Reaktion auf die dritte Operation, wobei das erste Video ein Video ist, das durch die im ersten Fenster angezeigten Bilder gebildet wird, und das zweite Video ein Video ist, das durch die im zweiten Fenster angezeigten Bilder gebildet wird.

7. Verfahren nach einem der Ansprüche 1 bis 6, wobei die erste Schnittstelle eine Vorschauschnittstelle vor dem Starten der Videoaufnahme ist.

8. Verfahren nach einem der Ansprüche 1 bis 7, wobei das Verfahren ferner umfasst:
weiteres Anzeigen einer ersten Identität im ersten Fenster durch das Endgerät als Reaktion auf die erste Operation;
Empfangen einer vierten Operation für die erste Identität durch das Endgerät; und
Anpassen des ersten Belichtungsparameters auf einen zweiten Belichtungsparameter durch das Endgerät als Reaktion auf die vierte Operation, wobei sich der zweite Belichtungsparameter im gesperrten Zustand befindet.

9. Verfahren nach Anspruch 8, wobei das erste Fenster ferner ein oder mehrere Steuerelemente umfasst und die vierte Operation eine Schiebeoperation ist; und
während der Schiebeoperation werden das eine oder die mehreren Steuerelemente nicht im ersten Fenster angezeigt;
wobei während der Schiebeoperation ferner ein Belichtungsänderungswert im ersten Fenster angezeigt wird und der Belichtungsänderungswert mit einer Schiebedistanz korrespondiert, die der Schiebeoperation entspricht.

10. Verfahren nach einem der Ansprüche 1 bis 9, wobei
weiteres Anzeigen einer Belichtungssperrungs-Eingabeaufforderung im ersten Fenster durch das Endgerät als Reaktion auf die erste Operation, wobei die Belichtungssperrungs-Eingabeaufforderung dazu dient, den Benutzer darauf hinzuweisen, dass die Belichtung gesperrt ist;
wobei das Verfahren ferner umfasst:
Empfangen, durch das Endgerät, einer fünften Operation für das erste Fenster; und
Aufheben, durch das Endgerät in Reaktion auf die fünfte Operation, der Sperrung eines Belichtungsparameters und Überspringen der Anzeige der Belichtungssperrmeldung im ersten Fenster.

11. Verfahren nach einem der Ansprüche 1 bis 10, wobei
Empfangen, durch das Endgerät, einer sechsten Operation für das erste Fenster; und
Anpassen, durch das Endgerät in Reaktion auf die sechste Operation, eines Belichtungsparameters im gesperrten Zustand auf einen dritten Belichtungsparameter basierend auf der sechsten Operation.

12. Endgerät (100), wobei das Endgerät einen Prozessor (180), einen Speicher (120), eine Anzeigeeinheit (140) und eine Kamera (150) umfasst und der Prozessor dazu konfiguriert ist, ein Computerprogramm im Speicher aufzurufen, um das Verfahren nach einem der Ansprüche 1 bis 11 durchzuführen.

13. Computerlesbares Speichermedium, wobei das computerlesbare Speichermedium Computeranweisungen speichert, die, wenn sie auf dem Endgerät nach Anspruch 12 ausgeführt werden, das Endgerät dazu befähigen, das Verfahren nach einem der Ansprüche 1 bis 11 durchzuführen.

## Revendications

1. Procédé d'enregistrement vidéo, appliqué à un terminal (100) comprenant une caméra (150), le procédé comprenant :
le pilotage, par le terminal, de la caméra pour acquérir des images en temps réel, dans lequel les images comprennent un premier objet, dans lequel une mise au point de la caméra est effectuée sur le premier objet, et la mise au point change en fonction d'une position du premier objet ;
l'affichage (S1101), par le terminal, d'une première interface, dans lequel la première interface comprend une première fenêtre et une deuxième fenêtre, les images acquises par la caméra en temps réel sont affichées dans la première fenêtre, et les images acquises par la caméra sont automatiquement recadrées en fonction du premier objet, et les images recadrées sont affichées dans la deuxième fenêtre, dans lequel le premier objet est affiché au centre de la deuxième fenêtre, dans lequel la deuxième fenêtre flotte au-dessus de la première fenêtre, et la deuxième fenêtre est plus petite que la première fenêtre ;
la détection (S1102), par le terminal à un premier instant, que le premier objet est affiché à une première position de la première fenêtre, et l'affichage, dans la deuxième fenêtre, des images recadrées qui comprennent le premier objet à la première position de la première fenêtre ;
la détection (S1103), par le terminal à un deuxième instant, que le premier objet est affiché à une deuxième position de la première fenêtre, et l'affichage, dans la deuxième fenêtre, des images recadrées qui comprennent le premier objet à la deuxième position de la première fenêtre ;
l'enregistrement et le stockage, par le terminal, des images affichées dans la première fenêtre en tant que première vidéo et l'enregistrement et le stockage, par le terminal, des images recadrées en tant que deuxième vidéo ; et
l'affichage, par le terminal, d'une première vignette de la première vidéo et d'une deuxième vignette d'une deuxième vidéo au sein d'une interface de galerie, dans lequel l'étape d'affichage comprend le réglage, par le terminal, d'une taille de la deuxième vignette de telle sorte qu'une différence de taille existe entre la première vignette et la deuxième vignette, dans lequel
lorsqu'un premier paramètre d'exposition des images acquises par la caméra en temps réel est dans un état verrouillé, le terminal commande, en réponse à la réception d'une opération de verrouillage d'exposition, une exposition de la caméra pour qu'elle soit verrouillée de telle sorte que le paramètre d'exposition au premier instant et le paramètre d'exposition au deuxième instant soient tous deux le premier paramètre d'exposition, l'opération de verrouillage d'exposition étant reçue lorsqu'une durée d'une opération d'appui effectuée par un utilisateur sur le terminal atteint une durée seuil ;
dans lequel, lorsque le premier paramètre d'exposition des images acquises par la caméra en temps réel est dans un état déverrouillé, le terminal commande l'exposition de la caméra sur la base de la mise au point de la caméra de telle sorte que le paramètre d'exposition au premier instant et le paramètre d'exposition au second instant sont différents,
dans lequel le paramètre d'exposition est l'un parmi : une ouverture, une vitesse d'obturation, une sensibilité ISO et une valeur d'exposition, EV.

2. Procédé selon la revendication 1, dans lequel les images dans la première fenêtre comprennent en outre un second objet, et le procédé comprend en outre :
la détection, par le terminal à un troisième instant, d'une première opération d'un utilisateur pour le second objet, dans lequel
en réponse à la première opération, la mise au point de la caméra est changée sur le second objet, et les images acquises par la caméra sont automatiquement recadrées sur la base du second objet, et les images recadrées sont affichées dans la seconde fenêtre ; et
lorsque le premier paramètre d'exposition des images acquises par la caméra en temps réel est dans l'état verrouillé, le terminal commande une exposition de la caméra pour être verrouillée de telle sorte qu'un paramètre d'exposition au troisième instant est le premier paramètre d'exposition.

3. Procédé selon la revendication 1, dans lequel les images dans la première fenêtre comprennent en outre un second objet, le premier paramètre d'exposition des images acquises par la caméra en temps réel est dans l'état déverrouillé, et
le procédé comprend en outre :
la détection, par le terminal à un troisième instant, d'une première opération d'un utilisateur pour le second objet, dans lequel
en réponse à la première opération, la mise au point de la caméra est changée sur le second objet, et les images acquises par la caméra sont automatiquement recadrées sur la base du second objet, et les images recadrées sont affichées dans la seconde fenêtre ; et
le terminal commande l'exposition de la caméra sur la base de la mise au point de la caméra de telle sorte qu'un paramètre d'exposition au troisième instant et le paramètre d'exposition au second instant sont différents.

4. Procédé selon l'une quelconque des revendications 1 à 3, dans lequel avant ou après l'affichage, par le terminal, d'une première interface, le procédé comprend en outre :
la réception, par le terminal, d'une seconde opération pour la première fenêtre ; et
le verrouillage, par le terminal en réponse à la seconde opération, d'un paramètre d'exposition de la caméra en tant que premier paramètre d'exposition.

5. Procédé selon l'une quelconque des revendications 1 à 4, dans lequel avant l'affichage, par le terminal, d'une première interface, le procédé comprend en outre :
affichage, par le terminal, d'une seconde interface, dans laquelle la seconde interface comprend la première fenêtre ; et
affichage, par le terminal, lorsqu'il détecte que les images affichées dans la première fenêtre comprennent le premier objet, d'une première identité de suivi associée au premier objet dans la première fenêtre ; et
l'affichage, par le terminal, d'une première interface d'une application caméra comprend :
affichage, par le terminal, de la première interface en réponse à une opération de déclenchement de l'utilisateur pour la première identité de suivi.

6. Procédé selon l'une quelconque des revendications 1 à 5, dans lequel la première interface est une interface de prévisualisation dans un processus d'enregistrement vidéo, la première interface comprend en outre une commande de fin, et le procédé comprend en outre :
détection, par le terminal, d'une troisième opération pour la commande de fin ; et
stockage, par le terminal, d'une première vidéo et d'une seconde vidéo en réponse à la troisième opération, dans lequel la première vidéo est une vidéo formée par les images affichées dans la première fenêtre, et la seconde vidéo est une vidéo formée par les images affichées dans la seconde fenêtre.

7. Procédé selon l'une quelconque des revendications 1 à 6, dans lequel la première interface est une interface de prévisualisation avant de commencer à enregistrer une vidéo.

8. Procédé selon l'une quelconque des revendications 1 à 7, dans lequel le procédé comprend en outre :
affichage supplémentaire, par le terminal, d'une première identité dans la première fenêtre en réponse à la première opération ;
réception, par le terminal, d'une quatrième opération pour la première identité ; et
ajustement, par le terminal en réponse à la quatrième opération, du premier paramètre d'exposition à un second paramètre d'exposition, dans lequel le second paramètre d'exposition est à l'état verrouillé.

9. Procédé selon la revendication 8, dans lequel la première fenêtre comprend en outre une ou plusieurs commandes, et la quatrième opération est une opération de glissement ; et
pendant l'opération de glissement, les une ou plusieurs commandes ne sont pas affichées dans la première fenêtre ;
dans lequel pendant l'opération de glissement, une valeur de changement d'exposition est en outre affichée dans la première fenêtre, et la valeur de changement d'exposition est liée à une distance de glissement correspondant à l'opération de glissement.

10. Procédé selon l'une quelconque des revendications 1 à 9, dans lequel
affichage supplémentaire, par le terminal, d'une invite de verrouillage d'exposition dans la première fenêtre en réponse à la première opération, dans lequel l'invite de verrouillage d'exposition sert à avertir l'utilisateur que l'exposition est verrouillée ;
dans lequel le procédé comprend en outre :
réception, par le terminal, d'une cinquième opération pour la première fenêtre ; et
annulation, par le terminal en réponse à la cinquième opération, du verrouillage d'un paramètre d'exposition, et omission de l'affichage de l'invite de verrouillage de l'exposition dans la première fenêtre.

11. Procédé selon l'une quelconque des revendications 1 à 10, dans lequel
réception, par le terminal, d'une sixième opération pour la première fenêtre ; et
ajustement, par le terminal en réponse à la sixième opération, d'un paramètre d'exposition dans l'état verrouillé à un troisième paramètre d'exposition sur la base de la sixième opération.

12. Terminal (100), dans lequel le terminal comprend un processeur (180), une mémoire (120), une unité d'affichage (140) et une caméra (150), et le processeur est configuré pour appeler un programme informatique dans la mémoire, afin d'exécuter le procédé selon l'une quelconque des revendications 1 à 11.

13. Support de stockage lisible par ordinateur, dans lequel le support de stockage lisible par ordinateur stocke des instructions informatiques, les instructions informatiques, lorsqu'elles sont exécutées sur le terminal de la revendication 12, permettant au terminal d'exécuter le procédé selon l'une quelconque des revendications 1 à 11.
